(19) Europäisches Patentamt
European Patent Office
Office européen des brevets

(11) EP 2 743 935 B1

(12) EUROPEAN PATENT SPECIFICATION

(45) Date of publication and mention of the grant of the patent:
**24.01.2018 Bulletin 2018/04**

(21) Application number: **12833214.5**

(22) Date of filing: **20.09.2012**

(51) Int Cl.:
***C08J 5/22*** (2006.01)
***C08G 65/40*** (2006.01)
***H01M 8/1051*** (2016.01)
*H01M 8/1018* (2016.01)
***H01B 1/12*** (2006.01)
***H01M 8/1025*** (2016.01)
***H01M 8/1048*** (2016.01)

(86) International application number:
**PCT/JP2012/074109**

(87) International publication number:
**WO 2013/042746 (28.03.2013 Gazette 2013/13)**

(54) **MOLDED ARTICLE OF POLYMER ELECTROLYTE COMPOSITION AND SOLID POLYMER TYPE FUEL CELL USING SAME**

FORMKÖRPER AUS EINER POLYMERELEKTROLYTZUSAMMENSETZUNG UND FESTPOLYMER-BRENNSTOFFZELLE DAMIT

ARTICLE MOULÉ EN COMPOSITION D'ÉLECTROLYTE POLYMÉRIQUE ET PILE À COMBUSTIBLE À POLYMÈRES SOLIDES L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2011 JP 2011205697**

(43) Date of publication of application:
**18.06.2014 Bulletin 2014/25**

(73) Proprietor: **Toray Industries, Inc.**
**Tokyo 103-8666 (JP)**

(72) Inventors:
- **KUNITA, Tomoyuki**
**Otsu-shi,**
**Shiga 520-8558 (JP)**
- **IZUHARA, Daisuke**
**Otsu-shi,**
**Shiga 520-8558 (JP)**
- **YACHI, Yuka**
**Otsu-shi,**
**Shiga 520-8558 (JP)**

(74) Representative: **Hoefer & Partner Patentanwälte mbB**
**Pilgersheimer Straße 20**
**81543 München (DE)**

(56) References cited:
**EP-A1- 1 772 919**
**EP-A1- 1 777 767**
**EP-A1- 1 858 032**
**EP-A1- 2 051 321**
**WO-A1-2008/143303**
**JP-A- 2004 031 307**
**JP-A- 2004 047 396**
**JP-A- 2006 099 999**
**JP-A- 2007 188 706**
**JP-A- 2008 117 754**
**JP-A- 2008 311 226**
**JP-A- 2010 170 935**
**JP-A- 2010 238 373**
**JP-A- 2011 023 308**
**JP-A- 2011 028 990**
**US-A1- 2006 019 140**
**US-A1- 2011 054 050**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a formed article of polymer electrolyte composition excellent in practicability, which has excellent proton conductivity even under low humidification conditions and under low temperature conditions, and which is capable of achieving excellent chemical stability, mechanical strength, fuel shutoff properties, and long-term durability, and also relates to a polymer electrolyte fuel cell.

### Background Art

A fuel cell is a kind of power generator which extracts electric energy through electrochemical oxidation of fuels such as hydrogen and methanol, and in recent years, the fuel cells have drawn attention as a clean energy supply source. Above all, since a polymer electrolyte fuel cell has a low standard operating temperature of approximately 100°C and has high energy density, the polymer electrolyte fuel cell is expected to be widely applied as relatively small-scale distributed power facilities and as a power generator of a mobile body such as automobile, ship, or the like. In addition, the polymer electrolyte fuel cell also draws attention as power sources such as small-scale mobile apparatus and portable apparatus, and is expected to be mounted on cell phone, personal computer, and the like in place of secondary batteries such as nickel-hydrogen battery and lithium-ion battery.

A normal fuel cell is constituted by using, as a unit, a cell in which a membrane electrode assembly (hereinafter referred to also as MEA) is sandwiched between separators, wherein the MEA is formed by an anode electrode and a cathode electrode causing a reaction that generates power, and by a polymer electrolyte membrane formed of a proton conductor between the anode and the cathode. Specifically, in the anode electrode, the fuel gas reacts in the catalyst layer to generate protons and electrons, and the electrons are sent to an external circuit via the electrode, while the protons are conducted to the polymer electrode membrane via the electrode electrolyte. On the other hand, in the cathode electrode, the oxidation gas, the protons conducted from the polymer electrolyte membrane, and the electrons conducted from the external circuit react each other in the catalyst layer to generate water.

Conventionally, the polymer electrolyte membranes widely adopted Nafion (registered trade mark, manufactured by DuPont) which is a perfluoro sulfonic acid-based polymer. Although Nafion (registered trade mark) is manufactured through multistage of synthesis, it has problems of extremely expensive and large fuel-crossover (transmission amount of fuel) while exhibiting high proton conductivity under low humidification conditions through the proton-conduction channel caused by the cluster structure. Furthermore, it was pointed that Nafion has problems in which membrane mechanical strength and physical durability caused by swell-drying are lost, and the use at high temperatures is not possible because of low softening point, and problems of waste disposal after the use, and of difficulty in recycling the material.

In order to overcome these drawbacks, the development of hydrocarbon-based polymer electrolyte membranes has been actively conducted in recent years being manufactured at a low cost and suppressing fuel-crossover, providing excellent mechanical strength and high softening point, and durable at high temperatures, substituting Nafion (registered trade mark). Specifically, toward the improvement of proton conductivity under low humidification conditions, there are progressing several studies to form a microphase separation structure using a block copolymer including a hydrophobic segment and a hydrophilic segment.

By using a polymer having such a structure, the hydrophobic segments aggregate each other by the hydrophobic interaction and the like to form a domain, thus improving the mechanical strength of the polymer, and the hydrophilic segments form a cluster by the electrostatic interaction and the like among ionic groups to form an ion-conduction channel, thus improving the proton conductivity under low humidification conditions.

Patent literature 1 provides a series of polymers which are block copolymers having hydrophobic segment without introduced sulfonic acid group therein and hydrophilic segment into which a sulfonic acid group is introduced, and the phase separation structure of the copolymers exhibits a co-continuous structure.

For these polymer electrolyte fuel cells, it is known that the cell reaction yields a peroxide in the catalyst layer formed on the interface between the polymer electrolyte membrane and the electrode, and that thus yielded peroxide becomes a peroxide radical while diffusing in the catalyst layer to deteriorate the electrolyte. In many cases, a side reaction between hydrogen or proton and oxygen generates hydrogen peroxide on the electrode to diffuse in the electrolyte. The hydrogen peroxide is a substance having strong oxidation power to oxidize many kinds of organic compounds structuring the electrolyte. It is presumed that mainly the hydrogen peroxide becomes radical, and the yielded hydroxyl radical becomes the direct reaction substance for the oxidation.

Compared with perfluoro sulfonic acid-based polymer electrolyte, generally hydrocarbon-based polymer electrolyte has problems of likely inducing break of main chain and decomposition of sulfonic acid group caused by hydrogen peroxide, and of poor long-term durability owing to the low resistance to radicals. In particular, for the case of polymer

electrolyte form article being formed by using the above-described block copolymer, the chemical deterioration caused by hydrogen peroxide rapidly proceeds higher than the speed in the case of random copolymers. Specifically, in the segment into which a sulfonic acid group is introduced, hydrogen peroxide intensively diffuses together with water, which more vigorously progresses the break of polymer chain, the decomposition of sulfonic acid group, and the elution of yielded oligomer, thus likely increases the resistance owing to the decreased proton conductivity, the formation of pin-hole, and the break of membrane, and finally deteriorates the long-term durability.

Patent literature 2 provides a polymer electrolyte composition which is a block copolymer having a segment without introduced sulfonic acid group therein and a segment into which a sulfonic acid group is introduced, and in which protons in a part of the sulfonic acid are substituted with polyvalent transition metal ions such as cerium ions.

Patent literature 3 discloses a technology to blend a block copolymer having the above-described segments with a sulfide.

Patent literature 4 discloses a technology in which a block copolymer having the above-described segments forms a sea-island structure, and fine particles of manganese oxide are dispersed in the structure.

Citation List

Patent Literature

Patent literature 1: Japanese Patent Laid-Open No. 2011-023308

Patent literature 2: Japanese Patent Laid-Open No. 2011-028990

Patent literature 3: Japanese Patent Laid-Open No. 2004-047396

Patent literature 4: Japanese Patent Laid-Open No. 2010-238373

WO 2008/143303 A1 teaches a a polymer electrolyte composite film which is superior in membrane properties and membrane strength and can achieve high proton conductivity, and a membrane-electrode assembly and a fuel cell which use the membrane. The polymer electrolyte composite film contains a block copolymer including a hydrophilic block and a hydrophobic block, and a solid acid, and has a microphase separation structure including a hydrophilic domain formed from the hydrophilic block and a hydrophobic domain formed from the hydrophobic block. The solid acid is localized in the hydrophilic domain.

US 2011/054050 A1 discloses an ion exchange membrane which is prepared from a block copolymer comprising a hydrophobic polymer segment and a polar polymer segment. The ion exchange membrane is formed by placing a film layer in steam, water or an electric field at a temperature greater than about 40 °C. for sufficient amount of time to develop a bicontinuous morphology. The ion exchange membrane is also formed from a film layer comprising a block copolymer and a solvent. The film layer is placed in an electric field at an elevated temperature and dried therein. The film layer is thereby converted into an ion exchange membrane with bicontinuous morphology. The ion exchange membrane prepared according to these processes exhibits improved mechanical and electrochemical properties.

EP 2051321 A1 provides a polymer electrolyte material which has excellent proton conductivity even under the conditions of a low humidity or a low temperature and is excellent in mechanical strength and fuel barrier properties, and which moreover can achieve high output, high energy density and long-term durability in forming a polymer electrolyte fuel cell therefrom, and a polymer electrolyte form article using the same and a method for producing the same, a membrane electrode assembly and a polymer electrolyte fuel cell, each using the same. In particular, the polymer electrolyte material is a polymer electrolyte material including a constituent unit (A1) containing an ionic group and a constituent unit (A2) substantially not containing an ionic group, wherein a phase separation structure is observed by a transmission electron microscope and a crystallization heat measured by differential scanning calorimetry is 0.1 J/g or more, or a phase separation structure is observed by a transmission electron microscope and the degree of crystallinity measured by wide angle X-ray diffraction is 0.5% or more. Also, the polymer electrolyte form article, the membrane electrode assembly and the polymer electrolyte fuel cell of the present invention are characterized by being composed of such polymer electrolyte materials.

EP 1858032 A1 concerns a method for producing a polymer electrolyte molded article, which comprises forming a polymer electrolyte precursor having a protective group and an ionic group, and deprotecting at least a portion of protective groups contained in the resulting molded article to obtain a polymer electrolyte molded article. Accordingly, it is possible to obtain a polymer electrolyte material and a polymer electrolyte molded article, which are excellent in proton conductivity and are also excellent in fuel barrier properties, mechanical strength, physical durability, resistance

to hot water, resistance to hot methanol, processability and chemical stability. A polymer electrolyte fuel cell using a polymer electrolyte membrane, polymer electrolyte parts or a membrane electrode assembly can achieve high output, high energy density and long-term durability.

## Summary of Invention

### Technical Problem

However, the present inventors have found the following issues in the prior art. Since the electrolyte described in patent literature 1 does not contain additives for suppressing the oxidation degradation, hydrogen peroxide concentrates, as described above, in the segment into which a sulfonic acid group is introduced, the oxidation reaction progresses, and thereby the long-term durability deteriorates compared with the case of random copolymers.

Here, the present inventors have found a new issue, because of the co-continuous phase separation structure adopted

for improving various characteristics, of deteriorating the long-term durability caused by an intensive attack on the segment into which a sulfonic acid group is introduced, acting as one side of the co-continuous phase separation structure.

The composition described in patent literature 2 requires high polymerization temperature, and the ether-exchange therein induces randomization, break of segment, and progress of side-reactions. As a result, the phase separation structure given by the composition lacks homogeneity, and the co-continuous phase separation structure is not observed, thus the composition in patent literature 2 does not have the above-described issue of the present invention. The present inventors expected that, by utilizing a technology to substitute protons of a part of the sulfonic acid group adopted by patent literature 2 with transition metal ions, the segment into which a sulfonic acid group is introduced decomposes the hydrogen peroxide diffused in the segment into which a sulfonic acid group is introduced because the segment contains the transition metal ions, thus efficiently protecting the segment into which a sulfonic acid group is introduced.

However, in these techniques, substitution of the protons of a part of the sulfonic acid group with the transition metal ions results in the decrease in ion-exchange capacity of the block copolymer. In addition, there is not formed the co-continuous microphase separation structure. That is, also there is not formed the domain of the segment without introduced sulfonic acid group therein, and there is not formed the ion-conduction channel of the segment into which a sulfonic acid group is introduced, thus the original mechanical strength and proton conductivity are not sufficient. As a result, when transition metal ions are given to the formed article of polymer electrolyte composition to a degree of providing sufficient chemical stability, the proton conductivity deteriorates to an unsuitable level for electrolyte membrane of fuel cell.

Similar to the above-described patent literature 2, patent literature 3 cannot observe the co-continuous or lamellar structure, thus there is no above-described issue of the present invention. The present inventors expected that, by utilizing a technology of adding a sulfide as the anti-oxidation agent, the durability is improved without substitution of protons in the sulfonic acid group, or without significant reduction of the proton conductivity.

Since, however, the sulfide as the anti-oxidation agent is a hydrophobic compound, the segment into which a sulfonic acid group is introduced cannot be fully protected, which is an original object, thus there cannot be suppressed the increase in the membrane resistance and the generation of pin-hole and membrane break.

Similar to patent literature 2 and patent literature 3, patent literature 4 cannot observe the co-continuous or lamella structure, and thus there is not the above-described issue of the present invention. In this case, however, manganese oxide is dispersed as the anti-oxidation agent. Here, the present inventors emphasized that the manganese oxide is a hydrophilic substance, and conducted intensive study to solve the issues of the present invention.

Responding to the background of the prior art, the present invention provides a formed article of polymer electrolyte composition which has excellent proton conductivity even under low humidification conditions and low temperature conditions, has excellent chemical stability, mechanical strength, and fuel shutoff properties, and when used in a polymer electrolyte fuel cell, can achieve high output, high energy density, and excellent long-term durability, and also provides a polymer electrolyte fuel cell using same.

### Solution to Problem

In order to solve the problems described above, the present invention adopts the following means. That is, the formed article of polymer electrolyte composition of the present invention has a composition according to the appended claims.

Advantageous Effects of Invention

The present invention can provide a formed article of polymer electrolyte composition which has excellent proton conductivity even under low humidification conditions, has excellent mechanical strength and chemical stability, and when used in a polymer electrolyte fuel cell, can achieve high output and excellent physical durability.

Brief Description of Drawings

[Figs. 1] Figs. 1 (M1) to (M4) are schematic drawings illustrating the phase separation structure modes classified into 4 types of a polymer electrolyte form article: (M1) shows an example of co-continuous pattern, (M2) shows an example of lamellar pattern, (M3) shows an example of cylindrical structure, and (M4) shows an example of sea-island structure.

Description of Embodiments

Hereinafter, the formed article of polymer electrolyte composition according to the present invention will be described below in detail.

As a result of extensive and intensive studies conducted to solve the above issues of the formed article of polymer electrolyte composition in fuel cell and the like, the present inventors have found that both the proton conductivity of the formed article of polymer electrolyte composition and the degree of oxidation degradation caused by hydrogen peroxide significantly depend on the phase separation structure, that is, the higher-order structure of the segment (A1) containing an ionic group and the segment (A2) not containing an ionic group, and on the shape of the phase separation structure, and also significantly depend on the presence/absence and the property of an additive that suppresses the oxidation degradation.

That is, the present inventors found out the solution of the entire above-described issues in the case where a formed article of polymer electrolyte composition contains: a block copolymer having one or more of each of a hydrophilic segment (A1) containing an ionic group and a hydrophobic segment (A2) not containing an ionic group; and an additive, wherein the formed article forms a co-continuous phase separation structure, and the additive is hydrophilic.

In the present invention, the term "segments" means a partial structure in the block copolymer, which includes a single kind of repeating unit or combination of plural kinds of repeating units, having a molecular weight of 2,000 or more. The block copolymer according to the present invention contains both the hydrophilic segment (A1) containing an ionic group and the hydrophobic segment (A2) not containing an ionic group, and although the present invention describes "segment not containing an ionic group", the segment (A2) can contain a small amount of ionic group within a range not adversely affecting the effect of the present invention. Hereinafter, the term "not containing an ionic group" is used in the same meaning as above, in some cases.

Furthermore, according to the present invention, the term "domain" means a mass formed by aggregation of similar segments in a single polymer chain or a plurality of polymer chains. The term "hydrophilic domain" means a mass formed by aggregation of hydrophilic segments (A1) containing an ionic group, and the term "hydrophobic domain" means a mass formed by aggregation of hydrophobic segments (A2) not containing an ionic group. Those domains can be observed by electron microscope and the like.

The formed article of polymer electrolyte composition according to the present invention forms a co-continuous separation structure in the phase separation structure observed by electron microscope or the like. That type of phase separation structure can be expressed in a polymer formed of two or more kinds of immiscible segments, for example, in a polymer constituted by a block copolymer including the above-described hydrophilic segment (A1) containing an ionic group and hydrophobic segment (A2) not containing an ionic group.

The structural aspect of the formed article of polymer electrolyte composition is largely classified into four types: co-continuous pattern (M1), lamellar pattern (M2), cylindrical structure (M3), and sea-island structure (M4) (Fig. 1).

In Fig. 1 (M1) to (M4), the light color continuous phase is formed by one segment selected from the segment (A1) containing an ionic group and the segment (A2) not containing an ionic group, and the dense color continuous phase or distributed phase is formed by another segment. Specifically, in the phase separation structure formed of the co-continuous pattern (M1) and the lamella pattern (M2), both the segment (A1) containing an ionic group and the segment (A2) not containing an ionic group form the continuous phase.

Such phase separation structure and the theory thereof are described, for example, in Annual Review of Physical Chemistry, 41, 1990, p.525, and the like.

By controlling the higher structure and shape of the hydrophilic segment (A1) containing an ionic group and the hydrophobic segment (A2) not containing an ionic group, there can be achieved excellent proton conductivity even under low humidification conditions and low temperature conditions. Specifically, when the structure thereof is the above-described given (M1) or (M2), that is co-continuous structure or lamellar structure, a continuous proton conduction

channel is formed, and at the same time, due to the crystallinity of the domain formed of the hydrophobic segment (A2) not containing an ionic group, there can be achieved a formed article of polymer electrolyte composition having not only excellent proton conductivity but also extremely high fuel shutoff properties, solvent resistance, mechanical strength, and physical durability, which is favorable. Furthermore, in the case of the co-continuous structure (M1), specifically superior characteristics given above can be achieved, which is more preferable.

In addition, also in the case of the above-described (M3) and (M4), that is, cylindrical structure and sea-island structure, respectively, the continuous proton conduction channel is considered to be formed. However, both structures are the ones which can be constructed under a condition under which the content of the segment containing an ionic group is relatively small compared with the content of the segment not containing an ionic group, or that the content of the segment not containing an ionic group is relatively small compared with the content of the segment containing an ionic group. In the former case, the amount of ionic group functioning as the proton conduction decreases, specifically in the sea-island structure, no continuous proton conduction channel is formed, which deteriorates the proton conductivity. In the latter case, although the proton conductivity is superior, the amount of crystalline nonionic domain is small, thus resulting in poor properties of fuel shutoff properties, solvent resistance, mechanical strength, and physical durability, which leads to obtaining insufficient effect of the present invention.

Consequently, it is preferred that the volume ratio of the hydrophilic domain constituted by the hydrophilic segment (A1) containing an ionic group to the hydrophobic domain constituted by the hydrophobic segment (A2) not containing an ionic group, (A1/A2), is 70/30 < A1/A2 < 30/70. From the viewpoint of developing co-continuous structure or lamellar structure, the ratio (A1/A2) is more preferably 60/40 < A1/A2 < 40/60. When the volume ratio (A1/A2) is outside the above range, the cylindrical structure and the sea-island structure might be developed, which might be inferior in proton conductivity, mechanical strength, and physical durability.

The aspect of the above phase separation structure can be observed and specified by TEM tomography. Specifically, for a 3-dimensional image obtained by the observation of TEM tomography, three digital slice images obtained by cutting in three directions (length, width, and height) are compared with each other. For example, in the case of co-continuous structure (M1) and lamella structure (M2), composed of hydrophilic segment (A1) containing an ionic group and hydrophobic segment (A2) not containing an ionic group, (A1) and (A2) in all these three images form the continuous phase. On the other hand, in the case of cylindrical structure (M3) and sea-island structure (M4), any of the segment (A1) and the segment (A2) does not form the continuous phase on at least one of these three images, which allows distinction from the former case, and also the structure can be discriminated from the respective patterns shown. Here, the term "continuous phase" means a phase in which individual domains are joined together, not being isolated from each other, in macroscopic view. However, portions not being partially joined together may exist.

The phase separation structure according to the present invention is observed on two-dimensional image as well as the above TEM tomography, and the phase separation structure can also be analyzed by scanning electron microscope (SEM), transmission electron microscope (TEM), atomic force microscope (AFM), and the like. However, in the present invention, observation with the transmission electron microscope (TEM) and the atomic force microscope (AFM) is preferable from the viewpoint of contrast, and observation with the transmission electron microscope (TEM) is more preferable from the viewpoint of being suitable for specimen observation in a dry state.

Specifically, in the present invention, in order to clarify the aggregate state and the contrast of the segment (A1) containing an ionic group and the segment (A2) not containing an ionic group, the formed article of polymer electrolyte composition is immersed in a 2 wt.% lead acetate aqueous solution for 2 days and thus ion-exchange of the ionic group is performed with lead, which is then subjected to observation by the transmission electron microscope (TEM) and the TEM tomography.

However, in such formed article made of the block copolymer constructing the microphase separation structure, however, the chemical deterioration of the formed article of polymer electrolyte composition caused by hydrogen peroxide and hydroxy radical proceeds more rapidly than the case of the random copolymers. In a formed article in which the microphase separation structure is formed, the hydrophilic domain and the hydrophobic domain are distinctively phase-separated from each other, and thus a large portion of the hydrogen peroxide that is the hydrophilic compound diffuses together with water into the hydrophilic domain. Therefore, compared with the case of random copolymers, the hydrophilic segment (A1) containing an ionic group intensively reacts with the hydrogen peroxide, the scission of polymer chain, the decomposition of sulfonic acid group, and the elution of yielded oligomer vigorously proceed, and thus the increase in the resistance caused by the deterioration of proton conductivity, the generation of pin-hole, and the breakage of membrane are easily caused, which leads to deterioration of the long-term durability.

Here, the present inventors have expected that an additive suppressing the oxidation degradation is unevenly distributed in the hydrophilic domain in the microphase separation structure of lamellar or co-continuous pattern and thus it may be possible to suppress the intensive deterioration of the hydrophilic segment (A1) containing an ionic group caused by hydrogen peroxide. In addition, the present inventors have found that a hydrophilic additive suppressing oxidation degradation is contained.

Furthermore, the content (mass) of the additive in the hydrophilic domain made of the hydrophilic segment (A1)

is preferably twice or more the content (mass) of the additive in the hydrophobic domain made of the hydrophobic segment (A2), three times or more is more preferable, and five times or more is further preferable. When the mass of the additive existing in the hydrophilic domain is outside the above range, or less than twice the mass of the additive existing in the hydrophobic domain, in order that satisfactory amount of the additive for imparting the long-term durability may be contained in the hydrophilic domain, a certain amount of additive is contained also in the hydrophobic domain, and thus there arise adverse effects such as the facts that (1) the total amount of additive becomes excessive and the proton conductivity is deteriorated, (2) aggregation and crystallization of the hydrophobic segment (A2) not containing an ionic group is hindered and the mechanical strength of the formed article of polymer electrolyte composition is decreased.

When the phase separation structure is observed by the transmission electron microscope (TEM) or the scanning electron microscope (SEM), the content of the additive in the hydrophilic domain and in the hydrophobic domain is measured by the energy dispersive X-ray spectrometry (EDX) or the electron prove micro-analyzer (EPMA) through the mapping of the element distribution.

The total content of the additive is preferably in a range of 0.001 to 40% by mass relative to the entire formed article of polymer electrolyte composition, more preferably 0.01 to 40% by mass, further preferably 0.01 to 35% by mass, and most preferably 0.1 to 30% by mass. Within the above range, it becomes possible to significantly suppress the oxidation degradation of the formed article of polymer electrolyte composition, without decreasing the proton conductivity. When the content of the additive is outside the above range, or less than 0.001% by mass, the amount of additive becomes insufficient and thus the hydrogen peroxide cannot be decomposed sufficiently. When the content thereof is larger than 40% by mass, the amount of additive becomes excessive and the cluster structure made by the hydrophilic segment (A1) containing an ionic group is disturbed, which destroys the proton conduction channel to thereby deteriorate the proton conductivity.

In the present invention, the cycle length of the microphase separation structure made of the segment (A1) containing an ionic group and the segment (A2) not containing an ionic group is the average value of those estimated from autocorrelation function given by an image processing of the phase separation structure obtained by the TEM observation. The cycle length is preferably in a range of 2 to 200 nm. From the viewpoint of proton conductivity, mechanical strength, and physical durability, the cycle length is more preferably in a range of 10 to 100 nm. When the cycle length of the microphase separation is outside the above range, that is, smaller than 2 nm, the microphase separation structure becomes vague, which fails to form good proton conduction channel. On the other hand, when the cycle length is larger than 200 nm, the proton conduction channel is formed, but swelling causes poor mechanical strength and physical durability.

A first example of the additive according to the present invention includes a polyphenylene sulfide particle into the surface of which an ionic group is introduced, wherein the polyphenylene sulfide is represented by $-(Ph-S)_n-$, (S is sulfur atom, Ph is phenylene group having an arbitrary substituent, and n signifies an integer of 10 or more).

Preferred ionic groups to be introduced into the polyphenylene sulfide particle are sulfonic acid group, sulfonimide group, sulfuric acid group, phosphoric acid group, phosphonic acid group, carboxylic acid group, hydroxyl group, thiol group, maleic acid group, maleic acid anhydride group, fumaric acid group, itaconic acid group, acrylic acid group, and methacrylic acid group. More preferable ionic groups are sulfonic acid group, sulfonimide group, sulfuric acid group, phosphoric acid group, phosphonic acid group, and thiol group, and further preferable ionic groups are sulfonic acid group and phosphonic acid group.

The polyphenylene sulfide particles into which the ionic group is introduced preferably have n of integer of 1, 000 or more from the viewpoint of durability in the above chemical structure.

The polyphenylene sulfide particles into which the ionic group is introduced are preferably polyphenylene sulfide particles having the paraphenylene sulfide skeleton by an amount of 70% by mole or more, and more preferably 90% by mole or more.

The method of manufacturing the polyphenylene sulfide particles containing an ionic group is not limited as long as the above conditions are satisfied. Specifically, there can be included: (1) the method of synthesizing the polyphenylene sulfide as the precursor, followed by introducing ionic group therein by a polymer reaction; (2) the method of polymerizing monomer containing an ionic group therein; and the like, and the method (1) is preferable because molecular weight, polymerization conditions, and the like are easily controlled.

Examples of the method of synthesizing the polyphenylene sulfide as the precursor include: a method of polymerizing a halogen-substituted aromatic compound (such as p-dichlorobenzene) in the presence of sulfur and sodium carbonate; a method of polymerizing a halogen-substituted aromatic compound with sodium sulfide or sodium hydrogen sulfide in the presence of sodium hydroxide in a polar solvent; a method of polymerizing a halogen-substituted aromatic compound with hydrogen sulfide in the presence of sodium hydroxide or sodium aminoalkanoate in a polar solvent; and self-condensation of p-chlorothiophenol. Among them, a suitable one is a method of causing sodium sulfide to react with p-dichlorobenzene in an amide-based solvent such as N-methylpyrrolidone or dimethylacetamide, or in a sulfone-based solvent such as sulfolane.

Detail of synthesis method of polyphenylene sulfide as the precursor is given in Specification of USP 2513188, Japanese Examined Patent Publication No.44-27671, Japanese Examined Patent Publication No. 45-3368, Japanese Examined Patent Publication No. 52-12240, Japanese Patent Laid-Open No. 61-225217, Specification of USP 3274165, Specification of British Patent No. 1160660, Japanese Examined Patent Publication No. 46-27255, Specification of Belgium Patent 29437, and Japanese Patent Laid-Open No. 05-222196, and further the synthesis methods disclosed in those patent literatures as examples of the prior art.

The amount of oligomer, in the polyphenylene sulfide as the precursor, extracted by methylene chloride is normally in a range of 0.001 to 0.9% by mass, preferably 0.001 to 0.8% by mass, and more preferably 0.001 to 0.7% by mass.

Here, the amount of oligomer extracted by methylene chloride within the above range means that the amount of oligomer (approximately decamer to tricontamer) in the polyphenylene sulfide particles is small. Setting the extracted amount of oligomer within the above range is preferable because of the difficulty in generating bleed-out.

Measurement of the amount of oligomer extracted by methylene chloride can be performed by the following method. That is, by addition of 5 g of polyphenylene sulfide powder to 80 mL of methylene chloride, Soxlet's extraction is performed for 4 hours, and then the mixture is cooled to room temperature. After that, the extracted methylene chloride solution is transferred to a weighing bottle. Furthermore, the vessel used for the above extraction is rinsed for three times using total 60 mL of methylene chloride and the rinsed liquid is collected in the above weighing bottle. Next, the weighing bottle is heated to about 80°C to evaporate and remove the methylene chloride in the weighing bottle and the residue is weighted. The amount of the residue makes it possible to obtain the percentage of oligomer in the polyphenylene sulfide.

As to the melt viscosity at 320 °C of the polyphenylene sulfide as the precursor (the value held for 6 minutes, through the use of a flow tester, under the conditions of 300°C, 196 N of load, and L/D (L is orifice length, D is orifice inner diameter) of 10/1), preferable range is 1 to 10,000 poise from the viewpoint of forming characteristics, and more preferable range is 100 to 10,000 poise.

The method of introducing ionic group into the polyphenylene sulfide as the precursor is not specifically limited, and ordinary methods are applied.

Regarding the introduction of sulfonic acid group, for example, known conditions can be applied using a sulfonation agent such as sulfuric anhydride, oleum, and chlorosulfonic acid. In detail, there can be applied the conditions described in: K.Hu, T.Xu, W.Yang, Y.Fu, Journal of Applied Polymer Science, Vol.91; and E.Montoneri, Journal of Polymer Science: Part A: Polymer Chemistry, Vol.27, 3043-3051 (1989). For example, the introduction of sulfonimide group can be done by the reaction of sulfonic acid group with sulfonamide group. A compound in which the introduced ionic group is substituted with a metal salt or an amine salt is preferably used. Preferred metal salt includes alkali metal salt such as sodium salt and potassium salt, and alkali earth metal salt such as calcium salt.

A second example of the above additive includes a metal compound containing manganese and/or cerium. The above-described given metal compound is not specifically limited in terms of composition, shape, and the like if only the compound contains manganese and/or cerium. The composition of the metal compound may contain a metal element other than manganese and cerium within a range not adversely affecting the effect of the present invention. Examples of metal elements other than manganese and cerium include cobalt, nickel, aluminum, titanium, iron, copper, zinc, tin, silicon, zirconium, vanadium, bismuth, chromium, ruthenium, palladium, rhodium, molybdenum, tungsten, yttrium, lead, germanium, indium, iridium, beryllium, neodymium, lanthanum, niobium, tantalum, gallium, samarium, hafnium, rhenium, lanthanum, praseodymium, gadolinium, calcium and the like.

The mode of the above metal compound includes particles of oxide, carbonate, phosphate and the like, and ions obtained by dissociated nitrate, chloride and the like, but the metal compound is not specifically limited. Any mode such as particles and ions can be preferably used.

First, examples of the particles of the metal compound will be specifically described.

Specifically, examples of the metal compound containing cerium include cerium (III) carbonate, cerium (III) oxide, cerium (IV) oxide, cerium (III) phosphate, cerium (III) sulfide, cerium vanadium oxide, cerium (III) aluminum oxide, nickel (II) oxide-samarium (III) cerium (IV) oxide and the like. Among them, preferable ones are cerium carbonate, cerium oxide, and cerium phosphate, and more preferable one is cerium oxide, from the viewpoint of a significant effect of suppressing oxidation degradation and of suppressing the raw material cost.

Examples of the metal compounds containing manganese include manganese (II) oxide, manganese (II, III) oxide ($Mn_3O_4$), manganese (III) oxide, manganese (IV) oxide, manganese (II) carbonate, manganese (IV) carbonate, manganese (II) ferrite, manganese (II) titanate, manganese (II) tungstate and the like. Among them, preferred ones are manganese (II) oxide, manganese (II, III) oxide, manganese (IV) oxide and manganese carbonate, and more preferable ones are manganese (II) oxide and manganese (IV) carbonate, from the viewpoint of a significant effect of suppressing oxidation degradation and of suppressing the raw material cost.

The particle of metal compounds may contain a metal other than Mn and Ce. Specifically, the particle of metal compound has a mole ratio in terms of metal [(Mn + Ce) : (Metal other than Mn, Ce)] of 100:0 to 5:95, preferably 99.9:

0.1 to 30:70, and more preferably 95:5 to 40:60. The mole ratio in the range gives a tendency of increasing the decomposition rate of hydrogen peroxide.

Furthermore, the particle of the metal compound may be a hydrated material, and may be a crystalline body or amorphous body. Moreover, the particle can be in powder or fibrous shape. From the viewpoint of dispersion property in the formed article of polymer electrolyte composition, powder is preferred. Moreover, a mode of being supported on a carrier such as alumina, silica, titania, or zirconia is applicable.

Generally, the particles of the metal compound are covered with a hydroxyl group on the surface thereof, and thus the particles tend to exhibit hydrophilic property. Consequently, a larger amount of the particles of the metal compound can exist in hydrophilic domain than in hydrophobic domain, and thus in the hydrophilic domain into which most of hydrogen peroxide diffuses, the hydrogen peroxide is decomposed by the particles of the metal compound before undergoing the scission of polymer chain, the decomposition of sulfonic acid group, and the elution of oligomer by the hydrogen peroxide, and thus the long-term durability of the formed article of polymer electrolyte composition of the present invention can be enhanced.

Subsequently, the example of the manganese ion and the cerium ion will be specifically described. The formed article of polymer electrolyte composition according to the present invention can contain any of manganese ion and cerium ion, or can contain both of them. Furthermore, the formed article of polymer electrolyte composition may contain a metal element other than manganese ion and cerium ion within a range not adversely affecting the effect of the present invention.

In the formed article of polymer electrolyte composition according to the present invention, the cerium ion ordinarily exists as the positive trivalent cation or the positive tetravalent cation. By addition of a salt containing a cerium ion, not only is the above-described chemical deterioration prevented, but also the ion-crosslinking can be formed by substituting, with a single cerium ion, a plurality of ionic groups existing in the formed article of polymer electrolyte composition, and thus the mechanical strength is enhanced and further long-term durability can be imparted.

The compound containing a cerium ion is not specifically limited if only the compound is hydrophilic and contains a positive trivalent cerium ion and/or a positive tetravalent cerium ion, and examples of the mode of the compounds include a salt containing a positive trivalent cerium ion, a salt containing a positive tetravalent cerium ion and the like. Specific examples of the salts containing the positive trivalent cerium ion include cerium (III) formate, cerium (III) acetate, cerium (III) propionate, cerium (III) butyrate, cerium (III) fluoride, cerium (III) chloride, cerium (III) bromide, cerium (III) iodide, cerium (III) nitrate, cerium (III) sulfate, cerium (III) perchlorate, cerium (III)oxalate, cerium (III) trifluoromethane sulfonate, cerium (III) benzenesulfonate, cerium (III) p-toluene sulfonate, cerium (III) tungstate and the like. Examples of the salts containing the positive tetravalent cerium ion include cerium (IV) fluoride, cerium (IV) nitrate, cerium (IV) sulfate, cerium (IV) diammonium nitrate, cerium (IV) tetraammonium sulfate, cerium (IV) ammonium nitrate and the like. Among them, cerium nitrate and cerium sulfate are preferred from the viewpoint of a significant effect of suppressing oxidation degradation and of suppressing the raw material cost.

In the formed article of polymer electrolyte composition of the present invention, the manganese ion ordinarily exists as the positive bivalent cation or the positive trivalent cation. By addition of a salt containing a manganese ion, not only is the above-described chemical deterioration prevented, but also the ion-crosslinking can be formed by substituting, with a single manganese ion, a plurality of ionic groups existing in the formed article of polymer electrolyte composition, and thus the mechanical strength is enhanced and further long-term durability can be imparted.

The compound containing a manganese ion is not specifically limited if only the compound is hydrophilic and contains a positive bivalent manganese ion and/or a positive trivalent manganese ion, and examples of the mode of the compounds include a salt containing a positive bivalent manganese ion, a salt containing a positive trivalent manganese ion and the like. Specific examples of the salt containing the positive bivalent manganese ion include manganese (II) formate, manganese (II) acetate, manganese (II) propionate, manganese (II) butyrate, manganese (II) gluconate, manganese (II) benzoate, manganese (II) fluoride, manganese (II) chloride, manganese (II) bromide, manganese (II) iodide, manganese (II) nitrate, manganese (II) sulfate, manganese (II) hypophosphite, manganese (II) phosphate, manganese (II) perchlorate and the like. Examples of the salts containing the positive trivalent manganese ion include manganese (III) acetate, manganese (III) fluoride, manganese (III) chloride, manganese (III) bromide, manganese (III) iodide, manganese (III)phosphate, manganese (III) nitrate, manganese (III) sulfate and the like. Among them, manganese acetate, manganese nitrate, and manganese sulfate are preferred from the viewpoint of a significant effect of suppressing oxidation degradation and of suppressing the raw material cost.

Such transition metal ions may exist alone or may exist as a complex coordinating with an organic compound, a polymer, and the like. The complex with pyridine containing a nitrogen atom, the complex with phenanthroline and the like, would be preferable from the viewpoint of suppressing elution of the additive during use period.

Examples of the ligand of the transition metal ion complex are the ones described in Japanese Patent Laid-Open No. 2000-106203, Japanese Patent Laid-Open No. 2007-238604, and Japanese Patent Laid-Open No. 2011-228014, an aromatic heterocyclic ring containing ligand atom and forming the ligand, and compounds given as examples of the prior art in the above-described patent literatures. As the ligands containing an aromatic heterocyclic

ring, there are exemplified imidazole, pyrazole, 2H-1,2,3-triazole, 1H-1,2,4-triazole, 4H-1,2,4-triazole, 1H-tetrazole, oxazole, iso-oxazole, thiazole, iso-thiazole, furazan, pyridine, pyrazine, pyrimidine, pyridazine, 1,3,5-triazine, 1,3,4,5-tetrazine, benzoimidazole, 1H-indazole, benzoxazole, benzothiazole, quinoline, isoquinoline, cinnoline, quinazoline, quinoxaline, phthalazine, 1,8-naphthyridine, pteridine, phenanthridine, 1,10-phenanthroline, purine, pteridine, perimidine, phthalocyanine and the like. Other than the above, there are included ligands such as: the ligand bonded to a metal ion via an oxygen atom of acetylacetone, oxalic acid, and the like; the ligand bonded to a metal ion via a nitrogen atom of ammonia, triethylamine, ethylenediamine, and the like; the ligand bonded to a metal ion via a carbon atom of cyclopentadiene, and the like; and the ligand bonded to a metal ion via a plurality of kinds of atoms of anthranilic acid, ethylenediamine tetra acetic acid, and the like. Among them, complex with a ligand containing a nitrogen atom of ammonia, triethylamine, ethylenediamine tetra acetic acid, anthranilic acid, pyridine, 1,10-phenanthroline, phthalocyanine, and the like would be preferably used due to excellent performance of decomposing hydrogen peroxide and hydroxyl radical and of imparting long-term durability to the formed article of polymer electrolyte composition.

A third example of the additive is fullerene to which an ionic group is introduced into the surface thereof. The ionic group being introduced into the fullerene is preferably sulfonic acid group, sulfonimide group, sulfuric acid group, phosphoric acid group, phosphonic acid group, carboxylic acid group, hydroxyl group, thiol group, maleic acid group, maleic acid anhydride group, fumaric acid group, itaconic acid group, acrylic acid group, and methacrylic acid group. More preferred ones are sulfonic acid group, sulfonimide group, sulfuric acid group, phosphoric acid group, phosphonic acid group, and thiol group, and further preferred ones are sulfonic acid group and phosphonic acid group.

Specific examples of the fullerene to which the ionic group is introduced therein are $C_{60}$, $C_{70}$, $C_{84}$, a dimer of $C_{60}$, a $C_{60}$ polymer, $C_{120}$, $C_{180}$, and the like to which ionic group is introduced therein. However, these are not limited as long as the fullerene has ability to trap hydrogen peroxide and/or ability to decompose hydrogen peroxide to hydroxide ion or water.

Furthermore, the number of ionic groups to be introduced into fullerene is preferably 2 or more and 30 or less relative to 60 carbons, more preferably 3 or more and 18 or less, and further more preferably 4 or more and 12 or less. When the number of ionic groups is outside the above range, that is, less than 2, the hydrophilic property becomes insufficient, and the fullerene cannot exist more in the hydrophilic domain. On the other hand, when the number thereof is larger than 30, the fullerene becomes dissolved in water, which results in gradual elution during power generation period to give poor long-term durability.

The method of manufacturing the fullerene is not limited as long as the above conditions are satisfied. In detail, applicable methods include the manufacturing method disclosed in Japanese Patent Laid-Open No. 2003-123793, Japanese Patent Laid-Open No. 2003-187636, Japanese Patent Laid-Open No. 2004-55562, Japanese Patent Laid-Open No. 2005-68124, and Japanese Patent Laid-Open No. 2010-37277, and the synthesis methods of the prior art given as examples in these patent literatures. For example, a sulfonic acid group can be introduced using a sulfonating agent such as sulfuric anhydride, oleum, or potassium sulfite. Sulfonimide can be introduced using a method of causing sulfonic acid group to react with sulfonamide group.

The phosphonic acid group can be introduced by the method of reacting with tetraethyl methylenediphosphonate in the presence of iodine and sodium iodide, by the method of reacting with $LiPO(OR^1)_2$($R^1$ is C1-C5 alkyl group or phenyl group), and the like. In addition, there is preferably used the one in which the introduced ionic group is substituted with metal salt or amine salt. Preferred metal salt is an alkali metal salt such as sodium salt or potassium salt, and an alkali earth metal salt such as calcium salt.

The average particle size of the hydrophilic additive particles is preferably in a range of 1 to 20 nm, and more preferably 2 to 10 nm. When the particle size is outside the above range, that is, smaller than 1 nm, the particles become unstable, and move and aggregate in the formed article of polymer electrolyte composition. When the particle size is larger than 20 nm, there appear adverse effects: (1) specific surface area becomes small and thus an ability to decompose hydrogen peroxide is insufficient; (2) microphase separation structure is disturbed and thus the proton conductivity and the mechanical strength are lowered; (3) the particle acts as a foreign substance in the formed article of polymer electrolyte composition and thus peeling at the interface between the polymer and the antioxidant particle is caused, resulting in breakage of the formed article of polymer electrolyte composition; and the like.

When the hydrophilic additive particles are used, they are preferably insoluble in water. When soluble particles are used as the additive, the particles flow out by dissolution of the additive in water produced during power generation, and the effect of improvement in durability is lost, and furthermore voids appear at the place where the additive exists and thus the mechanical strength and the fuel shutoff properties of the formed article of polymer electrolyte composition are deteriorated.

Although the hydrophilic additive can be used alone regardless of particle, ion, and complex, several kinds of additives can be simultaneously used.

According to the present invention, when adding the hydrophilic additive to the formed article of polymer electrolyte composition, it is necessary to mix the additive with the block copolymer, but the mixing method is not specifically limited, and the following methods are exemplified. (A) The method of dissolving the block copolymer in a solvent, then

dissolving or dispersing the hydrophilic additive in the solution, cast-coating the resultant solution or dispersion on a glass plate or the like, and removing the solvent, to thereby carry out forming. (B) The method of immersing the block copolymer form article in a solution containing the hydrophilic additive. (C) The method of coating the solution or dispersion containing the hydrophilic additive on the block copolymer form article. (D) The method of permeating the solution containing the hydrophilic additive into the block copolymer form article. (E) The method of mixing the melt of the block copolymer with the hydrophilic additive, and then performing extrusion of the resultant mixture. The above (A), (B), and (C) are preferred from the viewpoint of stability of the formed article of polymer electrolyte composition and of ease of control of the additive amount.

Furthermore, as described in the above-described (B) and (C), it becomes possible to add the hydrophilic additive without adversely affecting the microphase separation structure of the block copolymer by producing the block copolymer form article, by forming lamellar and/or co-continuous microphase separation structure, and by bringing a solution in which the hydrophilic additive is dissolved in water or in a hydrophilic solvent such as methanol, ethanol, and acetone into contact with the block copolymer form article. As in the method (A), when the block copolymer form article is produced in a state where the hydrophilic additive exists, there is a possibility of disturbance of the microphase separation structure due to the interaction between the additive and the block copolymer.

Moreover, by applying the hydrophilic additive by using the hydrophilic solvent through the method (B) or (C), the hydrophilic additive intensively penetrates into the hydrophilic domain together with the hydrophilic solvent, and thus the content of the hydrophilic additive can be further non-uniformly distributed in the hydrophilic domain. Consequently, as described above, the hydrogen peroxide and the hydroxyl radical diffusing into the hydrophilic domain can be decomposed more efficiently, and thus there can be obtained high proton conductivity under low humidification conditions, excellent mechanical strength and chemical stability which are the effect of the present invention, at further high level.

In addition, as described later, the formed article of polymer electrolyte composition according to the present invention is subjected to, in some cases, acid treatment by immersion in an acid solution, after forming. In that case, the following sequential processes are preferably contained. (1) The process of forming the block copolymer, and manufacturing the block copolymer form article having the formed co-continuous or lamellar microphase separation structure. (2) The process of acid-treating the block copolymer form article to thereby manufacture an acid-treated formed article. (3) The process of adding the hydrophilic additive to the acid-treated formed article. When changing the sequential order of the above (1) and (2) to thereby perform acid treatment before forming the block copolymer, the ionic group contained in the block copolymer serves as acid type, and thus the intermolecular hydrogen bond is strengthened and the handling performance is deteriorated. When changing the sequential order of the above (2) and (3) to thereby perform acid treatment after adding the additive, the additive elutes from the formed article and thus the effect of the present invention might be lost. When using the method (A), it is necessary to dissolve the block copolymer and the additive simultaneously, and thus the sequential order of the processes (2) and (3) is changed. On the other hand, when using the methods (B) and (C), the formed article of polymer electrolyte composition can be manufactured in the sequential order of the processes (1), (2), and (3).

For the above-described reasons, it is more preferable to apply the methods (B) and (C) as the mixing method of the hydrophilic additive with the formed article of polymer electrolyte composition.

In addition, when manufacturing the polymer electrolyte composition as the formed article of polymer electrolyte composition, it is preferable to perform the manufacturing in the above sequential order of the processes (1), (2), and (3). Furthermore, it is preferable to apply the above methods (B) and (C) as the mixing method of the hydrophilic additive with the polymer electrolyte composition membrane.

Hereinafter, the respective methods will be described in detail.

When using the method exemplified in the above (A), the respective components are blended at a specified ratio, and can be mixed together using a known method such as homo-mixer, homo-disperser, wave-rotor, homogenizer, disperser, paint-conditioner, ball mill, magnetic stirrer, mechanical stirrer or the like. The rotational speed of rotary mixer is not specifically limited if only the mixer can prepare homogeneous solution or dispersion. For example, when using a soluble additive or fine particles of 20 nm or smaller particle size, the rotational speed is preferably 200 rpm or more, and more preferably 400 rpm or more. When using, as the additive, particles of insoluble compound having a particle size of larger than 20 nm, it is necessary to crush the additive in liquid. In this case, the rotational speed is preferably 5,000 rpm or more, and more preferably 10,000 rpm. Although the rotational speed has no specific upper limit, practically 20, 000 rpm or 30, 000 rpm is often the upper limit due to the performance of the mixer. The polymer electrolyte solution or dispersion produced by the above methods contains the block copolymer and the hydrophilic additive uniformly dispersed in organic solvent, exhibits less aggregation, and exhibits no sedimentation of the block copolymer and the hydrophilic additive even after being left to stand for a long period of time.

The mixing time in a mixer is 5 seconds to 60 minutes, preferably 5 seconds to 5 minutes. Within the range, the hydrophilic additive is dispersed into the uniform polymer electrolyte solution, and after being allowed to stand, no sedimentation of the block copolymer and the hydrophilic additive is exhibited.

When the rotational speed and the mixing time at the time of mixing are insufficient, the block copolymer and

the hydrophilic additive cannot be uniformly dispersed, and sufficient durability of power generation cannot be obtained. In addition, after the dispersion of the polymer electrolyte is allowed to stand, sedimentation of the block copolymer and the hydrophilic additive is exhibited and variation in power generation performance is exhibited in some cases.

It suffices that applicable solvent used for forming is the one dissolving the block copolymer and then allowing removal thereof. Examples of the solvents to be used are: non-protonic polar solvent such as N,N-dimethylacetoamide, N,N-dimethylformamide, N-methyl-2-pyrrodidone, dimethylsulfoxide, sulfolane, 1,3-dimethyl-2-imdazolidinone, or hexamethylphosphone triamide; ester-based solvent such as γ-butylolactone or butylacetate; carbonate-based solvent such as ethylene carbonate or propylene carbonate; alkylene glycol monoalkyl ether such as ethylene glycol monomethyl ether, ethylene glycol monoethyl ether, propylene glycol monomethyl ether, or propylene glycol monoethyl ether; alcohol-based solvent such as isopropyl alcohol; water; and a mixture thereof. Among them, non-protonic polar solvent is preferred due to the highest solubility. In addition, in order to increase the solubility of the segment (A1) containing an ionic group, addition of crown ether such as 18-crown-6 is preferred.

Moreover, according to the present invention, it is important to form the co-continuous microphase separation structure in the block copolymer. The selection of solvent is important for the phase separation structure, and the use by mixing a non-protonic polar solvent with a low polar solvent is also a preferable method.

When using the method exemplified in the above (B), it is necessary to produce a formed article formed of the block copolymer before adding the hydrophilic additive, but the method is not specifically limited, and applicable ones are forming in a solution state and forming in a molten state. In the former case, there can be exemplified a method of dissolving the block copolymer in a solvent such as N-methyl-2-pyrrodidone, and then cast-coating the resultant solution on a glass plate or the like, followed by removing the solvent, to thereby perform the membrane production.

It suffices that applicable solvent used for carrying out forming is the one dissolving the block copolymer and then allowing removal thereof. Examples of the solvents to be used are: non-protonic polar solvent such as N,N-dimethylacetoamide, N,N-dimethylformamide, N-methyl-2-pyrrodidone, dimethylsulfoxide, sulfolane, 1,3-dimethyl-2-imdazolidinone, or hexamethylphosphone triamide; ester-based solvent such as γ-butylolactone or butylacetate; carbonate-based solvent such as ethylene carbonate or propylene carbonate; alkylene glycol monoalkyl ether such as ethylene glycol monomethyl ether, ethylene glycol monoethyl ether, propylene glycol monomethyl ether, or propylene glycol monoethyl ether; alcohol-based solvent such as isopropanol; water; and a mixture thereof. Among them, non-protonic polar solvent is preferred due to the highest solubility. In addition, in order to increase the solubility of the segment (A1) containing an ionic group, addition of crown ether such as 18-crown-6 is preferred.

Moreover, according to the present invention, it is important to form the co-continuous microphase separation structure in the block copolymer. The selection of solvent is important for the phase separation structure, and the use by mixing a non-protonic polar solvent with a low polar solvent is also a preferable method.

Although the concentration of the solvent containing the hydrophilic additive is not specifically limited, 0.01 μmol/L or larger and 1 mmol/L or smaller is preferable, 0.1 μmol/L or larger and 0.1 mmol/L or smaller is more preferable, and 1 μmol/L or larger and 50 μmol/L or smaller is further more preferable. When the concentration of the hydrophilic additive is excessively low, the introduction rate of the additive is decreased to thereby significantly deteriorate the production efficiency. On the other hand, when the concentration of the hydrophilic additive is excessively high, the introduction rate of the additive becomes excessively increased, and thus the control of the introduction amount of the additive becomes difficult.

Although the period of immersing the form article made of the block copolymer in the solution containing the hydrophilic additive is not specifically limited, 1 hour or longer and 200 hours or shorter is preferable, and 24 hours or longer and 120 hours or shorter is more preferable. Whether or not agitation of the solution containing the hydrophilic additive is carried out is not specifically limited, but it is preferable not to carry out agitation or to carry out agitation at 10,000 rpm or less, more preferable to carry out agitation at 10 rpm or more and 5, 000 rpm or less, and most preferable to carry out agitation at 100 rpm or more and 2,000 rpm or less. Agitation of a solution containing the hydrophilic additive is preferable from the viewpoint of increase in the introduction rate of the additive, but when the agitation is excessive, load is applied to the form article during the immersion, and thus the formed article is broken in some cases.

The solvent for dissolving the hydrophilic additive is not specifically limited as long as the solvent dissolves the additive and does not change the microphase separation structure of the formed article of polymer electrolyte composition, but preferable solvent is water or hydrophilic solvent such as methanol, ethanol, 1-propanol, isopropyl alcohol, butyl alcohol, and acetone. From the viewpoint of hydrophilic property, more preferable ones are water, methanol, ethanol, and isopropyl alcohol.

When using the method exemplified in the above (C), it is possible to obtain the formed article of polymer electrolyte composition of the present invention by producing the formed article formed of the block copolymer through the use of the same method as in the above (B), and then by coating the solution or dispersion containing the hydrophilic additive on the formed article.

The method of coating the hydrophilic additive includes, for example, bar-coating, spray-coating, slot-die, knife-coating, air-knife, brushing, gravure-coating, screen printing, inkjet printing, doctor-blade over-roll (a method of coating

the additive solution or dispersion onto the formed article of polymer electrolyte composition, and guiding the coated formed article through the gap between the knife and the support roll to thereby remove excess liquid) and the like, but the method is not limited to these.

Although the concentration of the solvent or dispersion containing the hydrophilic additive is not specifically limited, 50 μmol/L or larger and 0.5 mol/L or smaller is preferable, 0.1 mmol/L or larger and 0.1 mol/L or smaller is more preferable, and 0.5 mmol/L or larger and 20 mmol/L or smaller is further more preferable. When the concentration of the solution or dispersion containing the hydrophilic additive is excessively low, a huge amount of solvent is required in order to introduce a predetermined amount of the hydrophilic additive into the formed article made of the block copolymer, and the introduction thereof by coating becomes difficult or impossible. On the other hand, when the concentration of the solution or dispersion containing the hydrophilic additive is excessively high, the amount of liquid that can be used in order to introduce a predetermined amount of the additive into the formed article made of the block copolymer becomes extremely small, and thus the control of the introduction amount of the additive becomes difficult.

Furthermore, after coating the solution or dispersion containing the hydrophilic additive, there is required a process of drying the formed article to thereby remove the solvent in order to fix the additive to the formed article made of the block copolymer. Although the drying time is not specifically limited, 1 second or longer and 60 minutes or shorter is preferable, 10 seconds or longer and 30 minutes or shorter is more preferable, and 30 seconds or longer and 15 minutes or shorter is further more preferable. When the drying time is excessively short, the solvent evaporates before the hydrophilic additive sufficiently penetrates into the formed article, and thus the entire membrane become unable to be protected. On the other hand, when the drying time is excessively long, volatilization of water in the formed article made of the block copolymer deteriorates the proton conductivity.

Other drying conditions may be adequately selected depending on the kind of solvent so as to satisfy the above drying time. For example, as to the drying temperature in using water as the solvent, a temperature of 5°C or more and 150°C or less is preferable, 25°C or more and 120°C or less is more preferable, and 45°C or more and 105°C or less is further more preferable. When the drying temperature is excessively low, the increase in the drying time deteriorates the production efficiency. When the drying temperature is excessively high, volatilization of water in the formed article made of the block copolymer deteriorates the proton conductivity.

The block copolymer used in the formed article of polymer electrolyte composition according to the present invention is not specifically limited as long as the block copolymer forms co-continuous microphase separation structure, and is an aromatic polyether ketone among these block copolymers. Generally, the polyether ketone is a polymer having high crystallinity and providing extremely strong membrane. When the polyether ketone is introduced into the hydrophobic segment (A2) not containing an ionic group, a strong hydrophobic domain is formed, and thus excellent mechanical strength can be imparted to the formed article of polymer electrolyte composition of the present invention.

Above all, more preferable one is composed of a block copolymer which contains a constituent unit of the segment (A1) containing an ionic group, represented by the general formula (S1), and which contains a constituent unit of the segment (A2) not containing an ionic group, represented by the general formula (S2), and further preferable one is composed of a block copolymer in which the segment (A1) and the segment (A2) are joined together by a linker.

[Chemical formula 1]

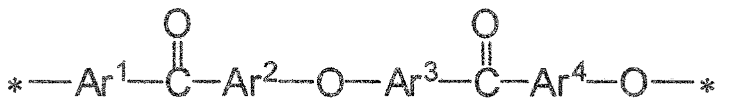

(S1)

where, in the general formula (S1), $Ar^1$ to $Ar^4$ are each an arbitrary divalent arylene group; $Ar^1$ and/or $Ar^2$ contain/contains an ionic group; and $Ar^3$ and $Ar^4$ may each contain or not-contain ionic group. $A^1$ to $Ar^4$ may each be arbitrarily substituted, and may each independently be two or more kinds of arylene groups. The symbol * signifies a bond moiety with the general formula (S1) or with other constituent unit,

[Chemical formula 2]

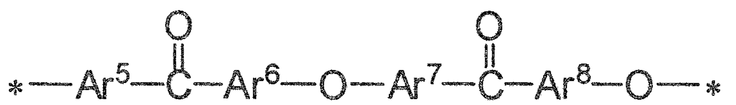

(S2)

where, in the general formula (S2), $Ar^5$ to $Ar^8$ are each an arbitrary divalent arylene group and may each be arbitrarily substituted, but do not contain an ionic group. $Ar^5$ to $Ar^8$ may each independently be two or more kinds of arylene groups.

The symbol * signifies a bond moiety with the general formula (S2) or with other constituent unit.

Here, examples of the preferred divalent arylene groups as $Ar^1$ to $Ar^8$ include: hydrocarbon-based arylene group such as phenylene group, naphthylene group, biphenylene group, or fluorene diyl group; and heteroarylene group such as pyridine diyl, quinoxaline diyl, or thiophene diyl, but they are not the limited ones. The $Ar^1$ and/or $Ar^2$ contain/contains an ionic group, and the $Ar^3$ and $Ar^4$ may contain or not contain an ionic group. Furthermore, the $Ar^3$ and $Ar^4$ may be substituted with a group other than ionic group, but not-substitution is more preferable from the viewpoint of proton conductivity, chemical stability, and physical durability. Moreover, preferably they are phenylene group and phenylene group containing an ionic group, and more preferably they are p-phenylene group and p-phenylene group containing an ionic group.

Moreover, according to the present invention, the term "linker" means a moiety connecting the segment (A1) containing an ionic group with the segment (A2) not containing an ionic group, and is defined as a moiety having a chemical structure different from that of the segment (A1) containing an ionic group and from that of the segment (A2) not containing an ionic group. The linker can perform connection between different segments while suppressing randomization, segment cutting, and side reactions by the ether-exchange reaction, through lowering of the polymerization temperature up to 120°C or less, and thus the linker is necessary in order to synthesize the block copolymer with a controlled structure, and further in order to develop the controlled microphase separation structure. When the linker is absent, segment cutting such as randomization may occur, and thus sufficient effects of the present invention, cannot be obtained in some cases.

The ionic group used in the block copolymer is preferably a group of atoms having negative electric charge, and preferably having proton-exchange ability. Such functional groups preferably used include sulfonic acid group, sulfonimide group, sulfuric acid group, phosphonic acid group, phosphoric acid group, and carboxylic acid group.

These ionic groups include the ones in which the functional groups become the respective salts. The cations forming these salts can include arbitrary metal cation and $NR_4^+$ (R is an arbitrary organic group). The metal cation can be used without limiting the number of valence, and the like. Specific examples of the preferable metal cations include Li, Na, K, Rb, Cs, Mg, Ca, Sr, Ba, Ti, Al, Fe, Pt, Rh, Ru, Ir, Pd, Pb, Cr, Mn, Fe, Ni, Cu, Zn, Zr, and Ce. Among them, Na, K, and Li which are inexpensive and easily capable of proton-substitution are preferable for the block copolymer according to the present invention.

These ionic groups can be contained in the block copolymer by two or more kinds of them, and the combination thereof is adequately determined by the polymer structure and the like. Among these ionic groups, at least sulfonic acid group, sulfonimide group, and sulfuric acid group are preferably contained from the viewpoint of high proton conductivity, and at least sulfonic acid group is most preferably contained from the viewpoint of raw material cost.

When the block copolymer contains sulfonic acid group, the ion-exchange capacity thereof is preferably in a range of 0.1 to 5 meq/g from the viewpoint of balance between the proton conductivity and the water resistance, more preferably 1.5 meq/g or larger, and most preferably 2 meq/g or larger. The ion-exchange capacity of the block copolymer is preferably 3.5 meq/g or smaller, and most preferably 3 meq/g or smaller. When the ion-exchange capacity is smaller than 0.1 meq/g, the proton conductivity becomes insufficient in some cases. When the ion-exchange capacity is larger than 5 meq/g, the water resistance becomes insufficient in some cases. The term "eq" referred to herein signifies "equivalent".

According to the block copolymer, the molar composition ratio of the segment (A1) containing an ionic group to the segment (A2) not containing an ionic group, (A1/A2), is preferably 0.2 or larger, more preferably 0.33 or larger, and most preferably 0.5 or larger. The molar composition ratio (A1/A2) is preferably 5 or smaller, more preferably 3 or smaller, and most preferably 2 or smaller. When the molar composition ratio A1/A2 is smaller than 0.2 or larger than 5, the effect of the present invention becomes insufficient in some cases, and further the proton conductivity under low-humidification conditions becomes insufficient, the hot water resistance and the physical durability become insufficient in some cases, which are unfavorable.

From the viewpoint of proton conductivity under low-humidification conditions, the ion-exchange capacity of the segment (A1) containing an ionic group is preferably high, more preferably 2.5 meq/g or larger, further preferably 3 meq/g or larger, and most preferably 3.5 meq/g or larger. The ion-exchange capacity thereof is preferably 6.5 meq/g or smaller, more preferably 5 meq/g or smaller, and most preferably 4.5 meq/g or smaller. When the ion-exchange capacity of the segment (A1) containing an ionic group is smaller than 2.5 meq/g, the proton conductivity under low-humidification conditions becomes insufficient, in some cases, and when the ion-exchange capacity thereof exceeds 6.5 meq/g, the hot water resistance and the physical durability become insufficient, in some cases, which both cases are unfavorable.

Lower ion-exchange capacity of the segment (A2) not containing an ionic group is more preferable from the viewpoint of hot water resistance, mechanical strength, dimensional stability, and physical durability, further preferably 1 meq/g or smaller, further preferably 0.5 meq/g, and most preferably 0.1 meq/g or smaller. If the ion-exchange capacity of the segment (A2) not containing an ionic group exceeds 1 meq/g, hot water resistance, mechanical strength, dimensional stability, and physical durability become insufficient, in some cases, which is unfavorable.

The term "ion-exchange capacity" referred to herein means the molar amount of introduced ionic group per

unit dry weight of the block copolymer, and the formed article of polymer electrolyte composition, respectively. Higher ion-exchange capacity means higher degree of ionization. The ion-exchange capacity can be measured by elemental analysis, neutralization titration and the like. Although the ion-exchange capacity can be calculated from the abundance ratio of carbon to hetero element specific to an ionic group (for example, sulfur in the case of sulfonic acid group and sulfuric acid group, and sulfur and nitrogen in the case of sulfonimide group, and phosphorus in the case of phosphonic acid group and phosphoric acid group) through the use of the elemental analysis, the measurement becomes difficult when hetero-element source other than the ionic group is contained. Therefore, in the present invention, the ion-exchange capacity is defined as the value obtained by the neutralization titration.

Examples of the neutralization titration are given below. The measurements are performed three or more times, and the average of them is adopted.

(1) A block copolymer or a formed article of polymer electrolyte composition is substituted by proton, followed by being fully rinsed with pure water. After wiping off the water on the surface, the block copolymer of the formed article is dried in a vacuum at 100°C for 12 hours or more, and then the dry weight is obtained.
(2) To a block copolymer or a formed article of polymer electrolyte composition, 50 mL of 5% by weight of aqueous solution of sodium sulfate is added, and the block copolymer or the formed article is allowed to stand for 12 hours to conduct ion-exchange.
(3) Using a 0.01 mol/L of sodium hydroxide aqueous solution, the generated sulfuric acid is titrated. As the indicator, commercially available 0.1 w/v% phenolphthalein solution for titration is added. The point where the color turns light purplish red is adopted as the end point.
(4) The ion-exchange capacity is obtained by the formula below,

Ion-exchange capacity (meq/g) = [Concentration of aqueous solution of sodium hydroxide (mmol/mL) x (Titrated amount (mL))]/[Dry weight of sample (g)]

Applicable method of introducing ionic group for obtaining the block copolymer includes: a method of performing polymerization by using a monomer containing an ionic group; and a method of introducing an ionic group in a polymer reaction.

As the method of performing polymerization by using a monomer containing an ionic group, a monomer containing an ionic group may be used in the repeating units. Such method is, for example, disclosed in Journal of Membrane Science, 197, 2002, p.231-242. The method is easy in controlling the ion-exchange capacity of polymer and is easily applied on an industrial scale, and thus the method is specifically preferred.

The method of introducing an ionic group by polymer reaction will be described below referring to examples. Introduction of a phosphonic acid group into an aromatic polymer can be performed by, for example, the method described in Polymer Preprints, Japan, 51, 2002, p.750. Introduction of a phosphoric acid group into an aromatic polymer can be performed by, for example, phosphoric acid esterification of an aromatic polymer containing a hydroxyl group. Introduction of a carboxylic acid group into an aromatic polymer can be performed by, for example, oxidation of an aromatic polymer containing an alkyl group and a hydroxy alkyl group. Introduction of a sulfuric acid group into an aromatic polymer can be performed by, for example, sulfuric acid esterification of an aromatic polymer containing a hydroxyl group. As the method of sulfonating an aromatic polymer, or the method of introducing a sulfonic acid group, there can be used, for example, the one described in Japanese Patent Laid-Open No. 02-16126, Japanese Patent Laid-Open No. 02-208322 or the like.

Specifically, for example, sulfonation can be performed by causing an aromatic polymer to react with a sulfonation agent such as chlorosulfonic acid in a solvent such as chloroform, or by causing an aromatic polymer to react in concentrated sulfuric acid or oleum. The sulfonation agent is not specifically limited if only the agent can sulfonate the aromatic polymer, and other than the above, sulfur trioxide and the like can be used. In the case of sulfonating an aromatic polymer by the above method, the degree of sulfonation can be controlled by the use amount of the sulfonation agent, the reaction temperature, and the reaction time. Introduction of a sulfone imide group into an aromatic polymer can be performed by, for example, a method of causing a sulfonic acid group to react with a sulfone amide group.

Next, there will be specifically described the block copolymer used for the formed article of polymer electrolyte composition according to the present invention.

The segment (A2) not containing an ionic group is preferably a constituent unit exhibiting crystallinity from the viewpoint of chemical stability and strong intermolecular cohesive force, and the segment (A2) makes it possible to obtain a block copolymer having excellent mechanical strength, dimensional stability, and physical durability.

A specific example of more preferable constituent unit represented by the general formula (S2) which is included in the segment (A2) not containing an ionic group is a constituent unit represented by the general formula (P1) from the viewpoint of availability of raw material. Among them, from the viewpoint of mechanical strength, dimensional stability, and physical durability, due to the crystallinity, the constituent unit represented by the formula (S3) is more preferred. Larger content of the constituent unit represented by the general formula (S2) which is included in the segment (A2) not containing an ionic group is more preferable, 20 mol% or larger content is further preferable, 50 mol% or larger content is more further preferable, and 80 mol% or larger content is most preferable. When the content is smaller than 20 mol%, the effect of the present invention in terms of mechanical strength, dimensional stability, and physical durability, due to crystallinity, becomes insufficient in some cases, which is not favorable.

[Chemical formula 3]

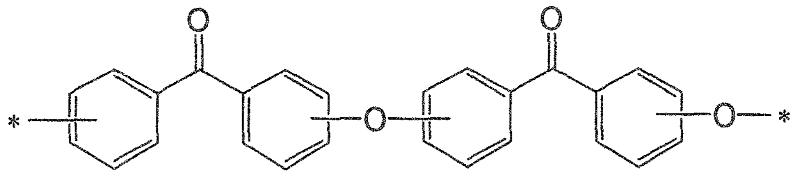

(P1)

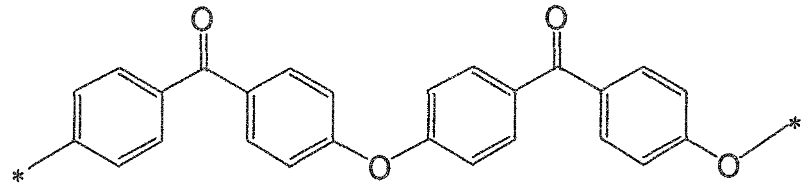

(S3)

In the segment (A2) not containing an ionic group, a preferred example of constituent unit that is caused to be copolymerized other than the constituent unit represented by the general formula (S2) includes an aromatic polyether-based polymer containing a ketone group, that is, the one having the constituent unit represented by the general formula (Q1), which does not contain an ionic group.

[Chemical formula 4]

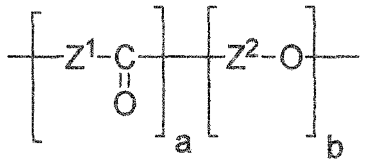

(Q1)

where, in the general formula (Q1), $Z^1$ and $Z^2$ are each a divalent organic group containing an aromatic ring, each of them may represent two or more kinds of groups, and each of them does not contain an ionic group; and a and b are each a positive integer.

Preferred organic group as $Z^1$ and $Z^2$ in the general formula (Q1) includes the one in which $Z^1$ is phenylene group, and $Z^2$ is at least one kind selected from the general formulae (X-1), (X-2), (X-4), and (X-5). Although the organic group may be substituted by a group other than ionic group, non-substitution is more preferable from the viewpoint of addition of crystallinity. As for $Z^1$ and $Z^2$, more preferable group is phenylene group, and the most preferable one is p-phenylene group.

[Chemical formula 5]

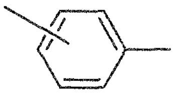
(X-1)

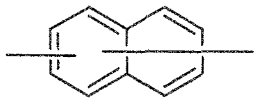
(X-4)

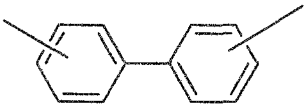
(X-2)

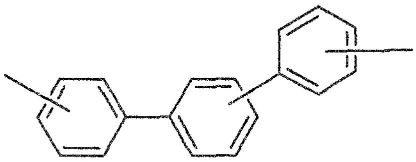
(X-5)

where, the group represented by the respective general formulae (X-1), (X-2), (X-4), and (X-5) may be substituted arbitrarily by a group other than an ionic group.

Specific examples of preferred constituent unit represented by the general formula (Q1) are the constituent units represented by the general formulae (Q2) to (Q7), but these constituent units are not the limited ones, and are adequately selectable in consideration of the crystallinity and the mechanical strength. Among them, from the viewpoint of crystallinity and manufacturing cost, more preferable constituent units represented by the general formula (Q1) are those represented by the general formulae (Q2), (Q3), (Q6), and (Q7), and the most preferable ones are the general formulae (Q2) and (Q7).

[Chemical formula 6]

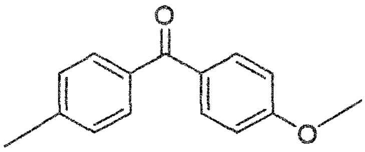
(Q2)

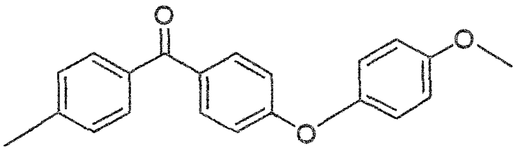
(Q3)

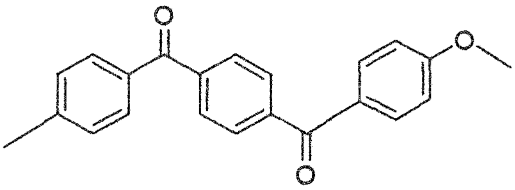
(Q4)

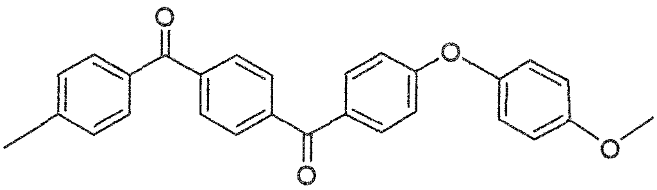
(Q5)

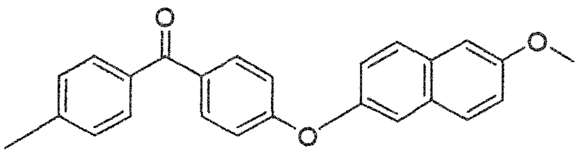
(Q6)

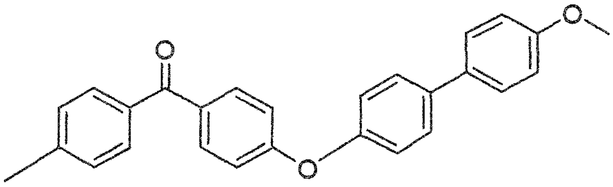
(Q7)

where, the general formulae (Q2) to (Q7) are expressed as compounds with substituents in the para-position, but a binding position other than ortho-position, meta-position or the like may be included as long as the constituent unit has crystallinity. However, para-position is more preferable from the viewpoint of crystallinity.

As the segment (A1) containing an ionic group, a constituent unit is more preferable, which is chemically stable, which increases the acidity owing to the electron-withdrawing effect, and which introduces sulfonic acid group at high density. Accordingly, there can be obtained a block copolymer having excellent proton conductivity under low-humidification conditions.

A specific example of more preferable constituent unit represented by the general formula (S1) included in the segment (A1) containing an ionic group is the constituent unit represented by the general formula (P2) from the viewpoint of availability of raw material. Among them, from the viewpoint of availability of raw material and polymerizability, the constituent unit represented by the formula (P3) is more preferable, and the constituent unit represented by the formula (S4) is most preferable. As to the content of the constituent unit represented by the general formula (S1) included in the segment (A1) containing an ionic group, larger content is more preferable; the content of 20 mol% or larger is further preferable, the content of 50 mol% or larger is more further preferable, and the content of 80 mol% or larger is most preferable. When the content is smaller than 20 mol%, the effect of the present invention on chemical stability and proton conductivity under low-humidification condition becomes insufficient in some cases, which is not favorable.

[Chemical formula 7]

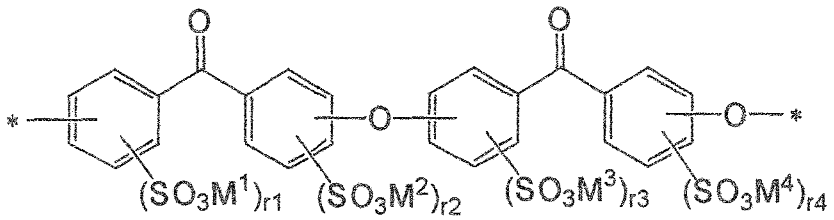

(P2)

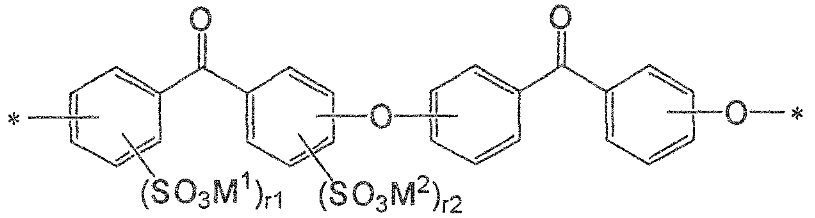

(P3)

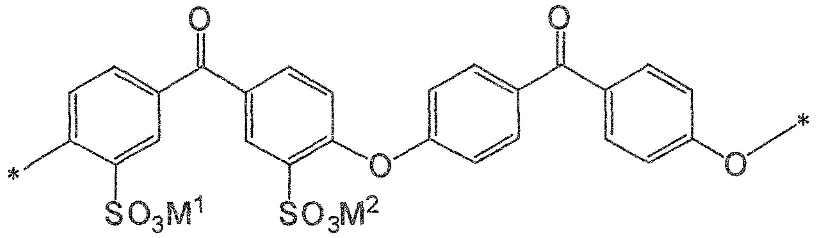

(S4)

where, in the formulae (P2), (P3), and (S4), $M^1$ to $M^4$ are each hydrogen, metal cation, and ammonium cation; $M^1$ to $M^4$ can be two or more kinds of groups; r1 to r4 are each independently 0 to 2; r1+r2 signifies 1 to 8; and r1 to r4 may each be two or more kinds of values.

A preferable example of the constituent unit that is caused to be copolymerized other than the constituent unit represented by the general formula (S1), as the segment (A1) containing an ionic group, includes an aromatic polyether-based polymer containing a ketone group and containing an ionic group.

The synthesis method for the segment (A1) containing an ionic group, used in the present invention, is not specifically limited if only the method is a method in which substantially sufficient molecular weight is obtained. For example, the synthesis can be performed through the utilization of: an aromatic nucleophilic substitution reaction of an aromatic active dihalide compound and a divalent phenol compound; or an aromatic nucleophilic substitution reaction of a halogenated aromatic phenol compound.

As an aromatic active dihalide compound used in the segment (A1) containing an ionic group, the use, as a monomer, of a compound in which an ionic acid group is introduced into an aromatic active dihalide compound is preferred from the viewpoint of chemical stability, manufacturing cost, and availability of precision control of the amount of ionic

group. Preferred examples of the monomer having sulfonic acid group as the ionic group can include, 3,3'-disulfonate-4,4'-dichlorodiphenylsulfone, 3,3'-disulfonate-4,4'-difluorodiphenylsulfone, 3,3'-disulfonate-4,4'-dichlorodiphenylketone, 3,3'-disulfonate-4,4'-difluorodiphenylketone, 3, 3'-disulfonate-4,4'-dichlorodiphenylphenylphosphine oxide, 3,3'-disulfonate-4,4'-difluorodiphenylphenylphosphine oxide and the like, but these examples are not limited.

From the viewpoint of proton conductivity and hydrolysis resistance, sulfonic acid group is most preferred as the ionic group, but the monomer having an ionic group used in the present invention may contain other ionic group. Among them, from the viewpoint of chemical stability and physical durability, more preferable ones are 3,3'-disulfonate-4,4'-dichlorodiphenylketone and 3,3'-disulfonate-4,4'-difluorodiphenylketone, and from the viewpoint of polymerization activity, the most preferable one is 3,3'-disulfonate-4,4'-difluorodiphenylketone.

As the monomer having an ionic group, the segment (A1) containing an ionic group synthesized using 3,3'-disulfonate-4,4'-dichlorodiphenylketone and 3,3'-disulfonate-4,4'-difluorodiphenylketone, further contains the constituent unit represented by the general formula (p1), and the segment (A1) is favorably used. The aromatic polyether-based polymer has the high crystallinity characteristics of ketone group, and is a component having superior hot water resistance to the sulfone group, thus serving as an effective component in the material excellent in dimensional stability, mechanical strength, and physical durability, under high-temperature and high-humidity conditions, thereby being further preferably used. In the polymerization, that type of sulfonic acid group preferably takes the form of a salt with monovalent cationic species. The monovalent cationic species may be sodium, potassium, other metal species, various kinds of amines or the like, and they are not specifically limited. These aromatic active dihalide compounds can be used alone, and can be used with a combination of a plurality of aromatic dihalide compounds.

[Chemical formula 8]

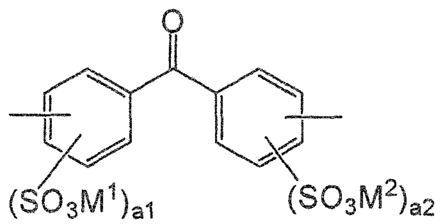

(p1)

where, in the general formula (p1), $M^1$ and $M^2$ are each hydrogen, metal cation, and ammonium cation; a1 and a2 are each an integer of 1 to 4; the constituent unit represented by the general formula (p1) may be arbitrarily substituted.

Furthermore, as to the aromatic active dihalide compound, the ionic group density can be controlled by copolymerization of the one containing an ionic group and the one not containing an ionic group. However, as to the segment (A1) containing an ionic group according to the present invention, the one not copolymerizing an aromatic active dihalide compound not containing an ionic group is more preferable from the viewpoint of securing continuity of the proton conduction pass.

Specific examples of more preferable aromatic active dihalide compound not containing an ionic group can include 4,4'-dichlorodiphenyl sulfone, 4,4'-difluorodiphenyl sulfone, 4,4'-dichlorodiphenyl ketone, 4,4'-difluorodiphenyl ketone, 4,4'-dichlorodiphenylphenylphosphine oxide, 4,4'-difluorodiphenylphenylphosphine oxide, 2,6-dichlorobenzonitrile, 2,6-difluorobenzonitrile and the like. Among them, 4,4'-dichlorodiphenyl ketone and 4,4'-difluorodiphenyl ketone are more preferable from the viewpoint of providing crystallinity, mechanical strength, physical durability, and hot water resistance. Above all, 4,4'-difluorodiphenyl ketone is the most preferable from the viewpoint of polymerization activity. These aromatic active dihalide compounds can be used alone, and can also be used together with a plurality of aromatic active dihalide compounds.

The block copolymer synthesized using 4,4'-dichlorodiphenyl ketone or 4,4'-difluorodiphenyl ketone as the aromatic active dihalide compound further contain the constitution moiety represented by the general formula (p2), and are preferably used. The constituent unit serves as a component that provides intermolecular cohesive force and crystallinity, thus serving as a material excellent in dimensional stability, mechanical strength, and physical durability under high-temperature and high-humidity conditions, and the constituent unit is preferably used.

[Chemical formula 9]

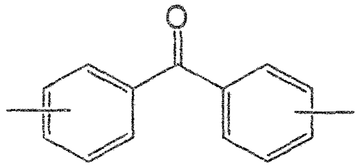

(p2)

where, the constituent unit represented by the general formula (p2) may be arbitrarily substituted, and does not contain an ionic group.

Furthermore, an example of the monomer not containing an ionic group, which can perform copolymerization, includes a halogenated aromatic hydroxy compound. Although the halogenated aromatic hydroxy compound is not specifically limited, examples of the compounds include 4-hydroxy-4'-chlorobenzophenone, 4-hydroxy-4'-fluorobenzophenone, 4-hydroxy-4'-chlorodiphenylsulfone, 4-hydroxy-4'-fluorodiphenylsulfone, 4-(4'-hydroxybiphenyl)(4-chlorophenyl)sulfone, 4-(4'-hydroxybiphenyl)(4-fluorophenyl)sulfone, 4-(4'-hydroxybiphenyl)(4-chlorophenyl)ketone, 4-(4'-hydroxybiphenyl)(4-fluorophenyl)ketone and the like. They can be used alone, and can be used as a mixture of two or more thereof. Furthermore, an aromatic polyether-based compound can be synthesized by causing these halogenated aromatic hydroxy compounds to react in the reaction between an activated dihalogenated aromatic compound and an aromatic dihydroxy compound.

As preferred examples of the constituent unit that is caused to be copolymerized other than the constituent unit represented by the general formula (S1), as the segment (A1) containing an ionic group, specifically preferable are aromatic polyether ketone-based polymer that includes the constituent unit represented by the general formulae (T1) and (T2) that contain the constituent unit represented by the general formulae (p1) and (p2), respectively.

[Chemical formula 10]

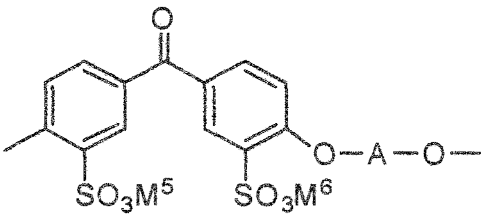

(T1)

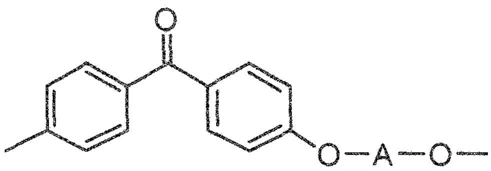

(T2)

where, in the general formulae (T1) and (T2), A is a divalent organic group containing an aromatic ring; $M^5$ and $M^6$ are each hydrogen, metal cation, and ammonium cation; and A may be two or more kinds of groups.

By changing the composition ratio of the constituent units represented by the general formulae (T1) and (T2), the ion-exchange capacity can be controlled. When the amounts of constituent units represented by the general formulae (p1), (T1) and (T2) are expressed as p1, T1 and T2, respectively, the introduction quantity of p1 is, on the basis of the sum of moles of T1 and T2, preferably 75 mol% or larger, more preferably 90 mol% or larger, and most preferably 100 mol%. When the introduction amount of p1 is smaller than 75 mol%, the formation of proton conduction pass becomes insufficient in some cases, which is not favorable.

Here, as the divalent organic group A containing an aromatic ring in the general formulae (T1) and (T2), there can be used various kinds of divalent phenol compounds which can be used for polymerization of aromatic polyether-based polymer by the aromatic nucleophilic substitution reaction, but the divalent organic group A is not limited. In addition, these aromatic dihydroxy compounds to which further introduces sulfonic acid group can be used as the monomer.

Specific examples of preferred divalent organic group A containing an aromatic ring are the groups represented by the general formulae (X'-1) to (X'-6), but they are not limited.

[Chemical formula 11]

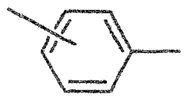
(X'-1)

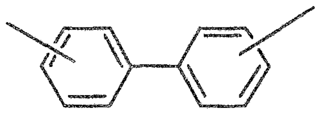
(X'-2)

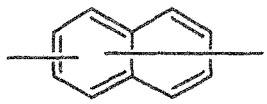
(X'-3)

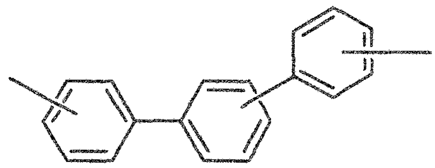
(X'-4)

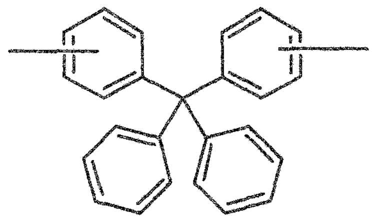
(X'-5)

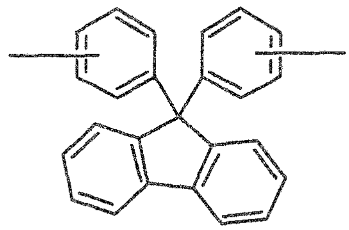
(X'-6)

where, the groups represented by the formulae (X'-1) to (X'-6) may be arbitrarily substituted.

They may contain an ionic group. The ones having aromatic ring at side chain are preferred specific examples. Two or more of them together are also used as necessary. Among them, more preferable groups are represented by the general formulae (X'-1) to (X'-4), and most preferable group is represented by the general formula (X'-2) or (X'-3) from the viewpoint of crystallinity, dimensional stability, toughness, and chemical stability.

The number-average molecular weights of the segment (A1) containing an ionic group and the segment (A2) not containing an ionic group are related to the domain size of the phase separation structure, and from the viewpoint of balance between the proton conductivity and the physical durability under low-humidification conditions, the number-average molecular weights of the segment (A1) and the segment (A2) are preferably 5,000 or larger, more preferably 10,000 or larger, and most preferably 15,000 or larger. In addition, the number-average molecular weight thereeach is preferably 50, 000 or smaller, more preferably 40,000 or smaller, and most preferably 30,000 or smaller.

The formed article of polymer electrolyte composition according to the present invention can be in various shapes depending on the uses, such as membrane (including film and film-like ones), plate, fiber, hollow fiber, particles, mass, fine pores, coating, and foamed one. Owing to the improvement in freedom of polymer design and the improvement in various characteristics such as mechanical characteristics and solvent resistance, they can be applied in wide range of uses. Specifically, when the formed article of polymer electrolyte composition is membrane, the use is preferred.

In using the formed article of polymer electrolyte composition according to the present invention as a polymer electrolyte fuel cell, a polymer electrolyte membrane and an electrode catalyst layer are preferably constituted by the formed article of polymer electrolyte composition. Among them, the formed article of polymer electrolyte composition is suitably used as a polymer electrolyte membrane. In using the formed article of polymer electrolyte composition as a polymer electrolyte fuel cell, the formed article is ordinarily used in a membrane state as a polymer electrolyte membrane and a binder of electrode catalyst layer.

The formed article of polymer electrolyte composition according to the present invention is applicable for various uses. The formed article is applicable for medical use such as extracorporeal circulation column or artificial skin; filtering use; ion-exchange resin use such as anti-chlorine reverse osmosis membrane; various structuring materials; electrochemical use; humidification membrane; antifogging membrane; antistatic membrane; solar cell membrane; and gas barrier material. In addition, the formed article is suitable for artificial muscle and actuator material. Among them, the formed article is more preferably used for various electrochemical uses. The electrochemical uses include fuel cell, redox flow battery, water electrolyzer, and chloroalkali electrolyzer, and the like. Among them, the fuel cell use is most preferable.

Next, the method of manufacturing the formed article of polymer electrolyte composition according to the present

invention will be specifically described.

In the conventional block copolymer including a segment containing an ionic group, a segment not containing an ionic group, and a linker moiety connecting the segments, not only the segment containing an ionic group but also the segment not containing an ionic group is formed of an amorphous polymer having solubility because of the limitation of synthesis, in which solubility to solvent is required at the time of polymerization and membrane-formation. The amorphous segment not containing an ionic group has poor cohesive force of polymer molecule chains, and thus when being formed in a membrane state, the amorphous segment has poor toughness, and cannot suppress the swelling of the segment containing an ionic group, and thus was not able to achieve satisfactory mechanical strength and physical durability. In addition, from the problem of thermal decomposition temperature of the ionic group, normally, the cast molding is used, and thus the crystalline polymer having poor solubility was not able to obtain a homogeneous and tough membrane in the cast molding.

The formed article of polymer electrolyte composition according to the present invention is constituted by a block copolymer having one or more of each of the segment (A1) containing an ionic group and the segment (A2) not containing an ionic group. Here, since the segment (A2) not containing an ionic group is a segment exhibiting crystallinity, it can be manufactured by the processes of: preparing a precursor of the block copolymer to which a protective group is introduced at least into the segment (A2) not containing an ionic group; forming an article of the precursor of the block copolymer; and then deprotecting at least a part of the protective group contained in the formed article. As to the block copolymer, processability tends to deteriorate owing to the crystallization of polymer forming the domain, in comparison with the processability of the random copolymer, and thus it is preferable to introduce the protective group at least into the segment (A2) not containing an ionic group and to improve the processability. Also into the segment (A1) containing an ionic group, the protective group is preferably introduced, when the processability becomes poor.

Specific examples of the protective group used in the present invention are the ones commonly used in organic synthesis, and the protective group is a substituent which is temporarily introduced on the premise of being removed in the subsequent step, which can protect highly reactive functional group to make the group inactive in the subsequent reaction, and which can perform deprotection after the reaction, to thereby return the protected group to the original functional group. That is, the protective group forms a pair with the functional group being protected. There are cases where, for example, t-butyl group is used as the protective group of hydroxyl group, but when a t-butyl group is introduced into the alkylene chain, the t-butyl group is not referred to as "the protective group". The reaction introducing the protective group is referred to as "the protection (reaction)", and the reaction removing the protective group is referred to as "the deprotection (reaction)".

Such protective reactions are, for example, described in detail in Theodora W. Greene, "Protective Groups in Organic Synthesis", U.S., John Wiley & Sons, Inc. 1981, and they can be preferably used. The reactions are appropriately selected in consideration of reactivity and yield of protection reaction and deprotection reaction, stability in a state of containing the protective group, manufacturing cost, and the like. In addition, the stage of introducing the protective group in the polymerization reaction may be monomer stage, oligomer stage, or polymer stage, and the stage can be appropriately selected.

Specific examples of the protection reactions include: the method of protecting/deprotecting the ketone moiety at the ketal moiety; and the method of protecting/deprotecting the ketone moiety at a hetero atom-analog of the ketal moiety such as thioketal. These methods are described in Chapter 4 of above literature Protective Groups in Organic Synthesis. Moreover, there are included: the method of protection/deprotection between sulfonic acid and a soluble ester derivative; the method of protection/deprotection by introducing a t-butyl group as the soluble group into aromatic ring and by removing the t-butyl group by an acid; and the like. However, these methods are not the limited ones, and any protective group can be preferably used. From the viewpoint of enhancing solubility in commonly-used solvents, an aliphatic group, especially, an aliphatic group containing ring portion is preferably used as the protective group, due to the large steric hindrance.

More preferable protection reaction includes, from the viewpoint of reactivity and stability, the method of protection/deprotection of ketone moiety at the ketal moiety; and the method of protection/deprotection of ketone moiety at a hetero atom-analog of the ketal moiety such as thioketal. In the block copolymer used in the formed article of polymer electrolyte composition according to the present invention, more preferable constituent unit containing protective group is the one containing at least one selected from the general formulae (U1) and (U2).

[Chemical formula 12]

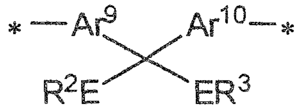
(U1)

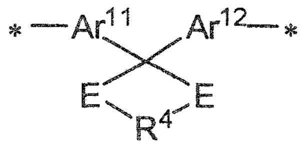
(U2)

where, in the formulae (U1) and (U2), $Ar^9$ to $Ar^{12}$ are each an arbitrary divalent arylene group; $R^2$ and $R^3$ are each at least one kind of group selected from H and alkyl group; $R^4$ is an arbitrary alkylene group; E is 0 or S, each may represent two or more kinds of groups; the group represented by the formulae (U1) and (U2) may be arbitrarily substituted; the symbol * signifies the bond moiety with the general formulae (U1) and (U2) or other constituent unit.

Among them, from the viewpoint of odor, reactivity, stability, and the like of the compound, the most preferable case is that E is O in the general formulae (U1) and (U2), that is, the method of protection/deprotection of ketone moiety at the ketal moiety is the most preferable.

In the general formula (U1), $R^2$ and $R^3$ are more preferably alkyl group from the viewpoint of stability, further preferably alkyl group having 1 to 6 of carbons, and most preferably alkyl group having 1 to 3 carbons. In addition, in the general formula (U2), from the viewpoint of stability, $R^4$ is preferably alkylene group having 1 to 7 carbons, that is, a group represented by $C_{n1}H_{2n1}$ (n1 is an integer of 1 to 7), and most preferably alkylene group having 1 to 4 carbons. Specific examples of $R^4$ include, $-CH_2CH_2-$, $-CH(CH_3)CH_2-$, $-CH(CH_3)CH(CH_3)-$, $-C(CH_3)_2CH_2-$, $-C(CH_3)_2CH(CH_3)-$, $-C(CH_3)_2C(CH_3)_2-$, $-CH_2CH_2CH_2-$, $-CH_2C(CH_3)_2CH_2-$ and the like, and these are not the limited ones.

Among the constituent units represented by the general formulae (U1) and (U2), from the viewpoint of stability such as hydrolysis resistance, the one having at least the general formula (U2) is preferably used. Most preferably, $R^4$ in the general formula (U2) is at least one kind selected from the group consisting of $-CH_2CH_2-$, $-CH(CH_3)CH_2-$, and $-CH_2CH_2CH_2-$, from the viewpoint of stability and ease of synthesis.

In the general formulae (U1) and (U2), preferable organic groups as $Ar^9$ to $Ar^{12}$ are phenylene group, naphthylene group, and biphenylene group. These organic groups may be arbitrarily substituted. As the block copolymer according to the present invention, from the viewpoint of solubility and availability of raw material, both $Ar^{11}$ and $Ar^{12}$ in the general formula (U2) are preferably phenylene groups, and most preferably both of them are p-phenylene groups.

In the present invention, the method of performing protection of the ketone moiety by ketal includes the method of causing a precursor compound having ketone group to react with a mono-functional and/or bi-functional alcohol in the presence of an acid catalyst. For example, the manufacturing can be performed by the reaction between 4,4'-dihydroxybenzophenone as the ketone precursor and mono-functional and/or bi-functional alcohol in a solvent of aliphatic or aromatic hydrocarbon in the presence of acid catalyst such as hydrogen bromide. The alcohol is an aliphatic alcohol having 1 to 20 carbons. An improvement method for manufacturing the ketal monomer used in the present invention is the reaction between 4,4'-dihydroxybenzophenone as the ketone precursor and bi-functional alcohol, in the presence of alkylorthoester and a solid catalyst.

In the present invention, the method of performing deprotection of at least a part of the ketone moiety protected by the ketal, to thereby set the part to the ketone moiety is not specifically limited. The deprotection reaction can be performed in the presence of water and acid under a homogeneous or heterogeneous condition, but from the viewpoint of mechanical strength, physical durability, and solvent resistance, the method of performing acid treatment after molding into membrane or the like is more preferable. Specifically, it is possible to deprotect the molded membrane by immersing it in an aqueous solution of hydrochloric acid or an aqueous solution of sulfuric acid. The concentration of acid and the temperature of aqueous solution can be adequately selected.

The weight ratio of the necessary acidic aqueous solution to the polymer is preferably in a range of 1 to 100 fold, and furthermore a large volume of water can be used. The acid catalyst is used preferably at a concentration of 0.1 to 50% by weight to the existing water. Preferred acid catalyst includes: strong mineral acid (strong inorganic acid) such as hydrochloric acid, nitric acid, fluorosulfonate, and sulfuric acid; and strong organic acid such as p-toluene sulfonic acid and trifluoromethane sulfonic acid. The amount of acid catalyst and of excessive water, the reaction pressure, and the like can be adequately selected depending on the thickness and the like of the formed article of polymer electrolyte composition.

For example, with a membrane having a thickness of 25 μm, it is possible to readily deprotect nearly the total

amount of the membrane by immersing the membrane in an acidic aqueous solution exemplified by aqueous solution of 6N hydrochloric acid and aqueous solution of 5% by weight of sulfuric acid, followed by heating the membrane for 1 to 48 hours at room temperature to 95°C. Furthermore, even when the membrane is immersed in an aqueous solution of 1N hydrochloric acid for 24 hours at 25°C, substantially all the protective groups can be deprotected. However, as the condition of deprotection, the above methods are not limited, and there can be performed deprotection by using acidic gas, organic acid, or heat treatment.

Specifically, for example, the precursor of the block copolymer containing the constituent unit represented by the general formulae (U1) and (U2) can be synthesized by using a compound represented by the general formulae (U1-1) and (U2-1) as the divalent phenol compound, and by using aromatic nucleophilic substitution reaction with an aromatic active dihalide compound. The constituent unit represented by the general formulae (U1) and (U2) may be derived from the divalent phenol compound or may be derived from the aromatic active dihalide compound. However, in consideration of the reactivity of the monomer, the use of a compound derived from a divalent phenol compound is more preferable.

[Chemical formula 13]

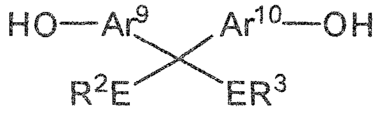

(U1-1)

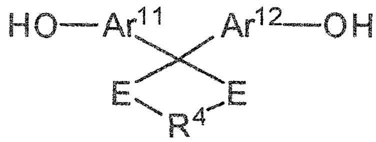

(U2-1)

where, in the general formulae (U1-1) and (U2-1), $Ar^9$ to $Ar^{12}$ are each an arbitrary a divalent arylene group; $R^2$ and $R^3$ are each at least one of H and alkyl group; $R^4$ is an arbitrary alkylene group; and E is O or S. The compound represented by the general formulae (U1-1) and (U2-1) may be arbitrarily substituted.

Specific examples of the specifically preferred divalent phenol compounds used in the present invention are compounds represented by the general formulae (r1) to (r10), and derivatives derived from these divalent phenol compounds.

[Chemical formula 14]

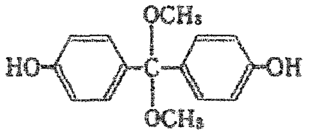
(r1)

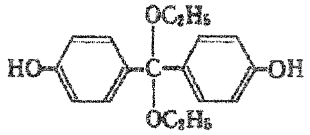
(r2)

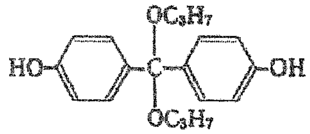
(r3)

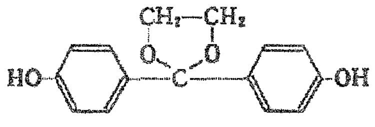
(r4)

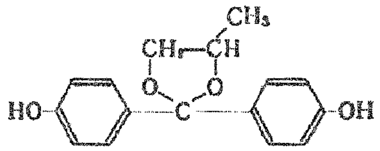
(r5)

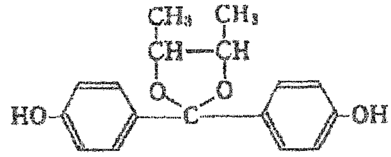
(r6)

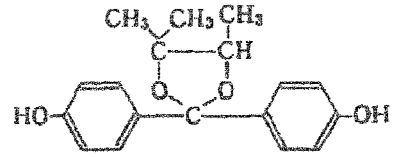
(r7)

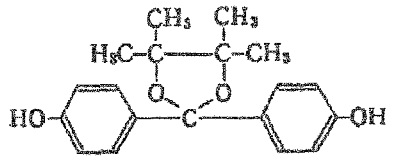
(r8)

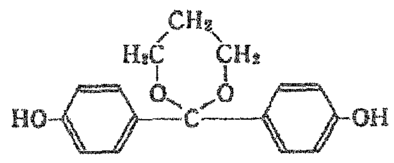
(r9)

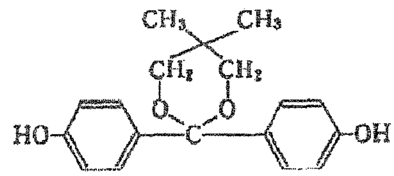
(r10)

Among these divalent phenol compounds, from the viewpoint of stability, the compounds represented by the general formulae (r4) to (r10) are preferred, more preferably the compounds represented by the general formulae (r4), (r5), and (r9), and most preferably the compound represented by the general formula (r4).

In the synthesis of oligomer by the aromatic nucleophilic substitution reaction being conducted in order to obtain the segment to be used in the present invention, an oligomer can be obtained by the reaction of the above monomer mixture in the presence of a basic compound. The polymerization can be performed at temperatures ranging from 0°C to 350°C, and the temperatures from 50°C to 250°C are preferred. When the temperature is lower than 0°C, the reaction tends not to proceed sufficiently, and when the temperature is higher than 350°C, the polymer decomposition tends to start occurring. Although the reaction can be done without solvent, it is preferable to conduct the reaction in a solvent. Applicable solvents include non-protonic polar solvents, and the like such as N,N-dimethylacetoamide, N,N-dimethylformamide, N-methyl-2-pyrrolidone, dimethylsulfoxide, sulfolane, 1,3-dimethyl-2-imidazolidinone, and triamide hexamethylphosphonate, but these solvents are not the limited ones, and any solvent can be applied if only the solvent can be used as a stable one in the aromatic nucleophilic substitution reaction. These organic solvents can be used alone or as a mixture of two or more thereof.

Examples of the basic compounds include sodium hydroxide, potassium hydroxide, sodium carbonate, potassium carbonate, sodium hydrogen carbonate, potassium hydrogen carbonate and the like, but they are not the limited ones, and any basic compound can be used as long as the compound can change the aromatic diols into the active phenoxide structure. In addition, in order to increase the nucleophilicity of the phenoxide, the addition of a crown ether such as 18-crown-6 is preferable. These crown ethers, in some cases, coordinate with sodium ions and potassium ions in the sulfonic acid group, to thereby improve the solubility to organic solvent, and can be favorably used.

In the aromatic nucleophilic substitution reaction, water is generated as a byproduct, in some cases. At this time, independent of the polymerization solvent, toluene or the like can be caused to coexist in the reaction system to remove the water from the system as an azeotrope. As the method of removing water from the reaction system, water-absorbent such as molecular sieve can be used.

The azeotropic agent to be used for removing reaction water or water introduced during the reaction is normally

an arbitrary inactive compound which does not substantially interfere with the polymerization, which carries out co-distillation with water, and boils at temperatures ranging from about 25°C to about 250°C. The normal azeotropic agent includes benzene, toluene, xylene, chlorobenzene, methylene chloride, dichlorobenzene, trichlorobenzene, cyclohexane and the like. Naturally, it is useful to select an azeotropic agent having lower boiling point than the boiling point of the bipolar solvent to be used. Although an azeotropic agent is normally used, the use of the azeotropic agent is not always required when the high reaction temperature, for example, 200°C or higher is used, specifically when an inert gas is continuously sprayed onto the reaction mixture. Normally, the reaction is desirably conducted in a state where no oxygen exists in an inert atmosphere.

When the aromatic nucleophilic substitution reaction is conducted in a solvent, it is preferred to charge the monomer so that the concentration of polymer to be obtained is 5 to 50% by weight. When the concentration is smaller than 5% by weight, the degree of polymerization tends not to increase. On the other hand, when the concentration is larger than 50% by weight, the viscosity of reaction system becomes excessively high, which tends to result in difficulty in post-treatment of the reaction products.

After the completion of the polymerization reaction, the solvent is removed by vaporization from the reaction solution, and the desired polymer is obtained after rinsing the residue, as necessary. In addition, it is also possible to obtain the polymer by the processes of: adding the reaction solution to a solvent which has low polymer solubility and high solubility of by-product inorganic salt, to thereby remove the inorganic salt and to precipitate the polymer as solid; and filtering the sediment. The recovered polymer is rinsed by, as necessary, water, alcohol, or other solvents, followed by being dried. When the desired molecular weight is obtained, the halide or the phenoxide terminal group can be caused to react by introducing a phenoxide or a halide terminal-blocking agent which forms a stable terminal group, in some cases.

The molecular weight of thus obtained block copolymer according to the present invention is, as the weight-average molecular weight in terms of polystyrene, in a range of 1,000 to 5 million, preferably 10,000 to 500,000. When the molecular weight is smaller than 1,000, any of the mechanical strength including cracking, the physical durability, and the solvent resistance, of the formed membrane may be insufficient. On the other hand, when the molecular weight exceeds 5 million, there arise problems such as insufficient solubility and high solution viscosity, thereby resulting in poor processability, and the like.

Meanwhile, the chemical structure of the block copolymer according to the present invention can be confirmed by infrared absorption spectra: S=O absorption of 1,030 to 1,045 $cm^{-1}$ and 1,160 to 1,190 $cm^{-1}$; C-O-C absorption of 1,130 to 1,250 $cm^{-1}$; C=O absorption at 1,640 to 1,660 $cm^{-1}$ and the like, and these composition ratios can be known by the neutralization titration of slufonic acid group and by the elemental analysis. In addition, nuclear magnetic resonance spectra ($^{1}$H-NMR) make it possible to confirm the structure by the peak of aromatic proton of 6.8 to 8.0 ppm, for example. Furthermore, the position of sulfonic acid group and the arrangement thereof can be confirmed by the solution $^{13}$C-NMR and the solid $^{13}$C-NMR.

Next, there will be exemplified a specific synthesis method of the block copolymer containing each one or more of: the segment (A1) containing an ionic group; the segment (A2) not containing an ionic group; and the linker moiety connecting the segments. However, the present invention is not limited by the examples.

Furthermore, the block copolymer according to the present invention can be manufactured by the steps of: synthesizing the precursor of the block copolymer; and deprotecting at least a part of the protective group contained in the precursor.

Examples of the method of manufacturing the block copolymer and the precursor of the block copolymer according to the present invention are the following:

Method a: The block copolymer is manufactured by the steps of: bringing a dihalide linker to react with any of the segment represented by the general formula (S1) having -OM group at both ends thereof and/or the segment precursor and the segment represented by the general formula (S2) having -OM group at both ends thereof and/or the segment precursor; and conducting polymerization alternately with another segment.

Method b: The block copolymer is manufactured by the step of randomly polymerizing the segment represented by the general formula (S1) having -OM group at both ends thereof and/or the segment precursor and the segment represented by the general formula (S2) having -OM group at both ends thereof and/or the segment precursor with the dihalide linker.

Method c: The method including the steps of: manufacturing the block copolymer by the method a or the method b using a non-sulfonated compound of the segment represented by the general formula (S1) and/or the precursor of the segment; and introducing selectively ionic group into the non-sulfonated portion of the segment represented by the general formula (S1) and/or the precursor of the segment.

Method d: The method of combination of above a to c.

In the present specification, O of -OM group is oxygen, and M is H, metal cation, and ammonium cation. In the case of the metal cation, the valence number and the like are not specifically limited in use. Specific examples of preferred

metal cation include Li, Na, K, Rh, Mg, Ca, Sr, Ti, Al, Fe, Pt, Rh, Ru, Ir, and Pd. Among them, Na, K, and Li are more preferable. As the -OM group, examples are hydroxyl group (-OH group), $-O^-NR_4^+$ group (R is H or an organic group), -ONa group, -OK group, and -OLi group.

Among the above methods, the Method a is most preferred from the viewpoint that the alternating copolymerization can control the phase-separated domain size and can manufacture chemically stable block copolymer.

That is, it is preferable that the method of manufacturing the block copolymer according to the present invention preferably includes at least the processes (1) and (4) described below. By including these processes, there can be achieved the enhancement of mechanical strength and durability due to the increase in the molecular weight, and by alternate introduction of both segments, there can be obtained the block copolymer having precise control of phase-separated structure and domain size and being excellent in proton conductivity at low-humidification conditions.

(1) The step of synthesizing the segment (A1) containing an ionic group, containing the constituent unit represented by the general formula (S1) and/or the constituent unit becoming the precursor of the constituent unit represented by the general formula (S1), having -OM group (M is H, metal cation, and ammonium cation) at both ends thereof.
(2) The step of synthesizing the segment (A2) not containing an ionic group, containing the constituent unit represented by the general formula (S2) and/or the constituent unit becoming the precursor of the constituent unit represented by the general formula (S2), having -OM group (M is H, metal cation, and ammonium cation) at both ends thereof.
(3) The step of introducing the linker moiety into the -OM group (M is H, metal cation, and ammonium cation) at both ends of the segment (A1) containing an ionic group, or of the segment (A2) not containing an ionic group.
(4) The step of manufacturing the block copolymer and the precursor of the block copolymer by polymerizing the linker moiety at both ends of the segment synthesized in the Step (3) and the -OM group (M is H, metal cation, and ammonium cation) at both ends of another segment.

The linker used in the present invention is required to be a compound which has high reactivity so as to be able to connect different segments while suppressing randomization and segment-cutting by the ether-exchange reaction. Specific examples of preferred linker compound are decafluorobiphenyl, hexafluorobenzene, 4,4'-difluorodiphenylsulfone, and 2,6-difluorobenzonitrile. However, the present invention is not limited to these compounds. When a polyfunctional linker such as decafluorobiphenyl and hexafluorobenzene is used, control of reaction conditions allows manufacturing a block copolymer having branched structure. In that case, by changing the charge composition of polymer having non-sulfonated segment represented by the formula (S1) and the polymer having the segment represented by the formula (S2), there can be separately manufactured the block copolymer with straight chain structure and the block copolymer with branched structure.

In the Method a, specific examples of the segment represented by the formula (S1) having -OM group at both ends thereof and the segment represented by the formula (S2) having -OM group at both ends thereof include the formulae (H3-1) and (H3-2), respectively. Specific examples of these segments obtained by the reaction with dihalide linker include the formulae (H3-3) and (H3-4), respectively. However, the present invention is not limited by these examples.

[Chemical formula 15]

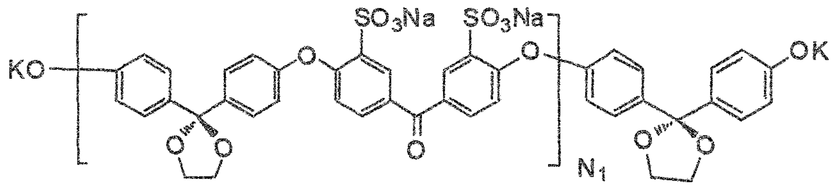

(H3-1)

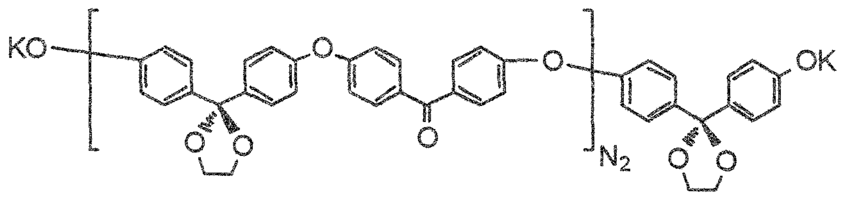

(H3-2)

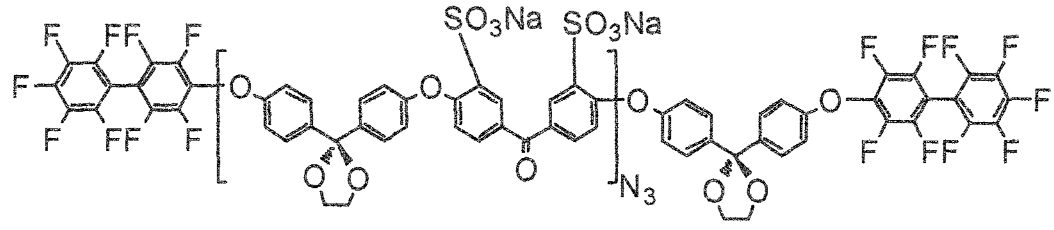

(H3-3)

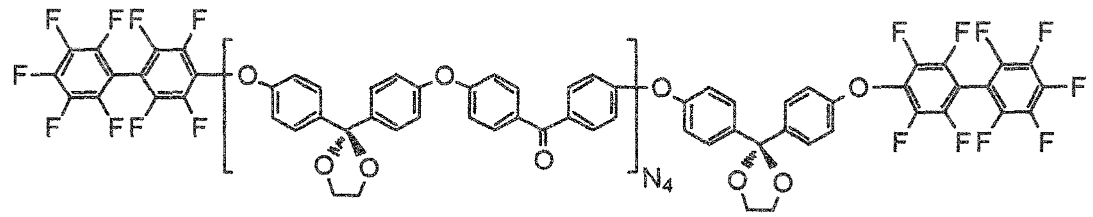

(H3-4)

where, in the formulae (H3-1) to (H3-4), N1, N2, N3, and N4 are each independently an integer of 1 to 150.

In the formulae (H3-1) to (H3-4), halogen atom is expressed by F, terminal -OM group is expressed by -OK group, and alkali metal is expressed by Na and K. However, they are not the limited ones. The above formulae are given in order to help understanding of readers, and they do not necessarily express strict chemical structure, accurate composition, arrangement, position of sulfonic acid group, number, molecular weight, and the like of the polymerization components of the polymer, and they are not the limited ones.

Furthermore, into any of the segments in the formulae (H3-1) to (H3-4), ketal group is introduced as the protective group. However, according to the present invention, the protective group is requested to introduce into a component having high crystallinity and low solubility. Therefore, the segment (A1) containing an ionic group represented by the formulae (H3-1) and (H3-3) not necessarily requires the protective group, and from the viewpoint of durability and dimensional stability, the one without protective group is also preferably used.

The block given in an example of the formula (H3-1) can synthesize an oligomer with controlled molecular weight through the reaction between a bisphenol ingredient and an aromatic dihalide ingredient by a ratio of ($N_1$ + 1) to $N_1$. The formula (H3-2) is the same as the above.

The reaction temperature of block copolymerization using linker is preferably 120°C or lower heating condition, and more preferably 80°C or higher and 120°C or lower. By setting the reaction temperature to 120°C or lower, the randomization of polymer structure by the ether-exchange in the reaction can be sufficiently suppressed, and for the formed article of polymer electrolyte composition, co-continuous or lamellar microphase separation structure can be developed. In contrast, when the reaction temperature becomes 120°C or higher, there can be obtained a polymer having a random polymer structure, and for the formed article of polymer electrolyte composition, there cannot be obtained co-continuous or lamellar microphase separation structure.

The block copolymer according to the present invention can be observed co-continuous or lamella phase separation structure using a transmission electron microscope. By controlling the phase separation structure of the block copolymer, or the aggregation state and the shape of the segment (A1) containing an ionic group and the segment not

containing an ionic group, excellent proton conductivity is attained even under low humidification conditions. The phase separation structure can be analyzed by transmission electron microscope (TEM), atomic force microscope (AFM), and the like.

The block copolymer according to the present invention is characterized in having crystallinity while keeping a phase separation structure, showing the crystallinity by the differential scanning calorimetry (DSC) or by the wide angle X-ray diffractometry. That is, the block copolymer exhibits the crystallization heat of 0.1 J/g or more determined by DSC, or exhibits the degree of crystallinity of 0.5% or more determined by the wide angle X-ray diffraction.

The term "having crystallinity" referred to herein means that the polymer can be crystallized when heated, has a crystalline property, or has already been crystallized. The term "amorphous polymer" referred to herein means a polymer which is not a crystalline polymer and which does not substantially progress the crystallization. Accordingly, even for a crystalline polymer, if the polymer does not sufficiently progress the crystallization, the polymer is in an amorphous state, in some cases.

In order to obtain a tough formed article, a preferred method is to subject the polymer solution prepared to give a necessary solid concentration, to normal pressure filtration or positive pressure filtration, and to thereby remove a foreign substance existing in the solution of polymer electrolyte composition. Although the filter medium used herein is not specifically limited, glass filter and metallic filter are preferable. For the filtration, the minimum filter pore size allowing the polymer solution to pass therethrough is preferably 1 $\mu$m or smaller. Unless the filtration is performed, inclusion of a foreign substance occurs, which is unfavorable because breakage of the formed article occurs and durability becomes insufficient.

Thus obtained formed article of polymer electrolyte composition is preferably subjected to heat treatment in a state where at least a part of the ionic groups is a metal salt. When the block copolymer used is polymerized in a metal salt state, it is preferable to perform forming and to perform the heat treatment in that condition. The metal of the metallic salt is the one capable of forming a salt with a sulfonic acid, and from the viewpoint of price and environmental load, the preferred metal includes Li, Na, K, Rb, Cs, Mg, Ca, Sr, Ba, Ti, V, Mn, Fe, Co, Ni, Cu, Zn, Zr, Mo, and W. Among them, more preferable ones are Li, Na, K, Ca, Sr, and Ba, and further more preferable ones are Li, Na, and K.

The heat treatment temperature is preferably in a range of 80°C to 350°C, more preferably 100°C to 200°C, and particularly preferably 120°C to 150°C. The heat treatment time is preferably 10 seconds to 12 hours, more preferably 30 seconds to 6 hours, and particularly preferably 1 minute to 1 hour. When the heat treatment temperature is excessively low, the mechanical strength and physical durability become insufficient in some cases. On the other hand, when the heat treatment temperature is excessively high, the chemical decomposition of the formed article proceeds in some cases. When the heat treatment time is shorter than 10 seconds, the effect of heat treatment becomes insufficient. In contrast, when the heat treatment time exceeds 12 hours, the formed article tends to deteriorate. The formed article of polymer electrolyte composition obtained by the heat treatment can be proton-substituted by immersion into an acidic aqueous solution, as necessary. By carrying out forming in this way, the formed article of polymer, electrolyte composition of the present invention makes it possible to simultaneously achieve a better balance of proton conductivity, chemical stability and physical durability.

The method of converting the block copolymer used in the present invention into the formed article of polymer electrolyte composition is performed by the processes of: producing the formed article constituted by the block copolymer by the above method; and then deprotecting at least a part of the ketone moiety being protected by ketal, to thereby obtain the ketone moiety. According to the method, it becomes possible to perform solution-forming of the block copolymer containing the block not containing an ionic group which is poor in solubility, and to thereby simultaneously achieve proton conductivity, , chemical durability, mechanical strength, and physical durability.

The formed article of polymer electrolyte composition of the present invention is preferably used as a polymer electrolyte membrane. The thickness of the polymer electrolyte membrane is used preferably in a range of 1 to 2, 000 $\mu$m. In order to attain practical-use level of mechanical strength and physical durability of the membrane, the thickness is preferably larger than 1 $\mu$m. In order to decrease the membrane resistance, or to improve the power generation performance, the thickness is preferably smaller than 2,000 $\mu$m. More preferred membrane thickness range is from 3 to 50 $\mu$m, particularly preferable range is from 10 to 30 $\mu$m. That membrane thickness can be controlled by the solution concentration or by the coating thickness on the substrate.

In addition, to the formed article of polymer electrolyte composition obtained in the present invention, there can be added additives such as crystallization nucleating agent, plasticizer, stabilizer, antioxidant, and mold-releasing agent, used for ordinary polymer compounds, or disperser for uniformly dispersing the hydrophilic additive, within a range not inversely affecting the object of the present invention.

Furthermore, to the formed article of polymer electrolyte composition obtained in the present invention, there can be added various polymers, elastomers, fillers, fine particles, various additives, and the like, within a range not inversely affecting the above characteristics, in order to enhance the mechanical strength, heat stability, processability and the like. In addition, the polymer electrolyte membrane may be reinforced with fine porous film, nonwoven cloth, mesh, and the like.

The polymer electrolyte fuel cell makes use of a hydrogen ion-conductive polymer electrolyte membrane as the electrolyte membrane, and has a structure of laminating a catalyst layer, an electrode substrate, and a separator, alternately, on both sides of the membrane. Among them, the one in which the catalyst layer is laminated on both sides of the electrolyte membrane, (that is, the layer structure of catalyst layer / electrolyte membrane / catalyst layer) is called "the catalyst-coated electrolyte membrane (CCM) ", and the one in which the catalyst layer and the gas-diffusion substrate are alternately laminated on both sides of the electrolyte membrane (that is, the laminated structure of gas-diffusion substrate / catalyst layer / electrolyte membrane/ catalyst layer/ gas-diffusion substrate) is called the "electrode-electrolyte membrane joined assembly (MEA)".

A common method of manufacturing the catalyst layer-coated electrolyte membrane is the coating method of coating and drying a catalyst layer paste composition for forming the catalyst layer on the surface of the electrolyte membrane. However, this coating method causes swelling and deformation of the electrolyte membrane caused by the solvent such as water or alcohol, thus raising a problem of difficulty in forming the desired catalyst layer on the surface of the electrolyte membrane. Furthermore, in the drying process, the electrolyte membrane is also exposed to high temperature atmosphere, thereby resulting in raising a problem of thermal expansion or the like and deformation. In order to solve the problem, there is proposed a method of laminating the catalyst layer on the electrolyte membrane (transfer method), in which only the catalyst layer is formed on the substrate in advance, and then the catalyst layer is laminated (for example, Japanese Patent Laid-Open No. 2009-9910).

The polymer electrolyte membrane obtained in the present invention has toughness and has excellent solvent resistance owing to its crystallinity, and thus can specifically be preferably used also as the catalyst layer-coated electrolyte membrane by any of the coating method and the transfer method.

When MEA is produced by hot press, there is no special limitation, and there can be applied known methods such as chemical plating method described in J. Electrochem. Soc., 1985, 53, p.269, (Electrochemical Society of Japan), and hot-press joining method for gas-diffusion electrode described in Electrochemical Science and Technology, 1988, 135, 9, p.2209.

When composite is applied by hot press, the temperature and the pressure may be adequately selected depending on the thickness of electrolyte membrane, the water content, the catalyst layer, and the electrode substrate. Furthermore, according to the present invention, press-composite can be applied even when the electrolyte membrane is in a dry state or in a state of absorbing water. Specific press method includes roll press specifying pressure and clearance, flat press specifying pressure and the like, and from the viewpoint of industrial productivity and suppression of thermal decomposition of polymer material containing an ionic group, the press is preferably performed in a temperature range of 0°C to 250°C. From the viewpoint of protection of electrolyte membrane and of electrode, the press is preferably performed under lower pressure as much as possible, and in the case of flat press, 10 MPa or smaller pressure is preferred. A preferred selectable method is, from the viewpoint of prevention of short-circuit of anode and cathode electrodes, to join the electrode and the electrolyte membrane to thereby form the fuel cell without applying composite-formation by the hot press process. With that method, when power generation is repeated as the fuel cell, the deterioration of electrolyte membrane presumably originated from the short-circuit position tends to be suppressed, which improves the durability of fuel cell.

Furthermore, the intended uses of the polymer electrolyte fuel cell using the formed article of polymer electrolyte composition according to the present invention are not specifically limited, but power supply source to mobile body is a preferred one. Specifically, preferred uses are substitution of conventional primary cell or secondary cell, or hybrid power sources therewith, and include: handy equipments such as cell phone, personal computer, PDA, TV, radio, music player, game player, head set, and DVD player; various robots of human type and animal type for industrial use; household electric appliances such as cordless vacuum cleaner; toys; power sources of mobile bodies such as vehicle including motor bicycle, motorbike, automobile, bus or truck, ship, and railway; and stationary power generator.

## Examples

Hereinafter, the present invention will be described in more detail referring to examples, but the present invention is not limited by these examples. The conditions for measuring the physical properties are as follows. In addition, although, in the examples, chemical structural formulae are inserted, they are inserted in order to help the understanding of readers, and they are not the limited ones.

### (1) Ion-exchange capacity

The ion-exchange capacity was measured by neutralization titration described in the following (1) to (4). The measurements were performed three times, and then the average of them was taken.

1) There was wiped off the moisture on the surface of the electrolyte membrane on which proton substitution was

performed and which was fully rinsed by pure water, and then the membrane was dried for 12 hours or more in vacuum at 100°C. After that, the dry weight of the membrane was obtained.
2) To the electrolyte, there was added 50 mL of aqueous solution of 5% by weight of sodium sulfate, and the resultant solution was allowed to stand for 12 hours for conducting ion-exchange.
3) The generated sulfuric acid was titrated using aqueous solution of 0.01 mol/L sodium hydroxide. To the solution, commercially available 0.1 w/v% phenolphthalein solution for titration was added as the indicator, and the end point was set to be a point at which the color changes to light reddish violet.
4) The ion-exchange capacity was obtained by the following formula.

Ion-exchange capacity (meq/g) = [Concentration of aqueous solution of sodium hydroxide (mmol/mL) x (Titration amount (mL))]/[Dry weight of sample (g)]

(2) Proton conductivity

The membrane-shaped sample was immersed for 24 hours in pure water at 25°C. Then the sample was held in a thermo-hygrostat at 80°C and at a relative humidity of 25 to 95% for each 30 minutes at individual steps. After that, the proton conductivity was measured by the controlled potential AC impedance method.
The measurement apparatus used was an electrochemical measurement system of Solartron Inc. (Solartron 1287 Electrochemical Interface and Solartron 1255B Frequency Response Analyzer). The controlled potential impedance measurement was performed by the 2-probe method and the proton conductivity was obtained. The AC amplitude was 50 mV. The sample used was a membrane having 10 mm in width and 50 mm in length. The measurement jig was fabricated by phenol resin, and the measurement portion was opened. The electrode used was platinum plates (2 plates each having a thickness of 100 μm). The electrodes were arranged so as the distance therebetween to become 10 mm and so as to be in parallel each other and be orthogonal to the longitudinal direction of the sample membrane, on front and rear side of the sample membrane.

(3) Number-average molecular weight and weight-average molecular weight

The number-average molecular weight and the weight-average molecular weight of polymer were measured by GPC. As the integrated analyzer of ultraviolet ray detector and differential diffractometer, HLC-8022GPC manufactured by TOSOH Corporation was applied. As the GPC column, two columns of TSK gel Super HM-H (6.0 mm in inner diameter, 15 cm in length, manufactured by TOSOH Corporation) were used. The measurement was done using N-methyl-2-pyrrolidone solvent (N-methyl-2-pyrrolidone solvent containing 10 mmol/L of lithium bromide) under a condition of 0.1% by weight of sample concentration, 0.2 mL/min of flow rate, at 40°C. The number-average molecular weight and the weight-average molecular weight were obtained in terms of standard polystyrene.

(4) Membrane thickness

The measurement was performed by ID-C112 manufactured by Mitsutoyo Co. mounted on a granite comparator stand BSG-20 manufactured by Mitsutoyo Co.

(5) Observation of phase separation structure by transmission electron microscope (TEM)

A sample piece was immersed in an aqueous solution of 2% by weight of lead acetate as a staining agent, where the sample was allowed to stand for 48 hours at 25°C. Then, the sample subjected to a staining treatment was taken out from the solution, the sample was embedded in a visual curing resin, the sample was irradiated with visual light for 30 seconds for fixing the stain.
Using an ultramicrtome, the thin piece of 100 nm thickness was machined at room temperature, and thus obtained thin piece was fixed on a Cu grid and was subjected to TEM observation. The observation was done at an accelerating voltage of 100 kV, and the photographing was executed so that the magnification becomes x8, 000, x20,000, and x100, 000, respectively. Microscope used was TEM H7100FA (manufactured by Hitachi, Ltd.)

(6) Observation of phase separation structure by TEM tomography

The thin piece of specimen prepared by the method of (5) was mounted on a collodion film, and was observed under the following conditions.

Apparatus: Field emission type electron microscope (HRTEM) JEM 2100F, manufactured by JEOL
Acquisition of image: Digital Micrograph
System: Marker method
Accelerated voltage: 200 kV
Photographing magnitude: x30, 000
Tilt angle: +60° to -62°
Reconstruction resolution: 0.71 nm/pixel

Marker method was applied to the 3-dimension reconstruction processing. The alignment marker in performing the 3-dimensional reconstruction used Au colloid particles on the collodion film. With the marker as the basis, the specimen was tilted in a range of +61° to -62° with every 1° of inclination to create total 124 sheets of TEM images through the series of continuous inclination images of photographed TEM images, and the CT reconstruction processing was performed on the basis of these TEM images, and thus the 3-dimensional phase separation structure was observed.

(7) Autocorrelation function using TEM image and the Method of calculating cycle length

Using the image processing software, Image J, and in accordance with the methods 1) to 7) given below, there were calculated the autocorrelation function derived from the image processing of the phase separation structure obtained by TEM observation, and the cycle length of microphase separation estimated therefrom.

1) Reading the image (File size is changed to 512 x 512 pixels or 1024 x 1024 pixels and thus the image resolution is checked.)
2) Executing the Process/FFE/FD Math to generate the image from the autocorrelation function as the Result (16 bit is recommended as the image type).
3) Executing Image/Adust/Brightness Contrast to conduct color correction.
4) Executing Line Profile so as to pass through the bright point at center of the image, by using Line tool.
5) Executing Analyze/Plot Profile to generate Plot of Result.
6) Executing List Button to generate intensity and distance, thus creating the graph.
7) Measuring the distance between the center brightness to the first proximity peak of the autocorrelation function (generated image), thus calculating the cycle length.

(8) Energy dispersive X-ray spectrometry (EDX)

In observing the above TEM, the element analysis was performed by EDX. For each of the hydrophilic domain and the hydrophobic domain, the element analysis was performed at 50 points, and their average value was obtained. After removal of the contribution of the block copolymer from the value, the amount of additive existing in each domain was calculated from the abundance ratio of elements contained in the additive. As to the device, rTEM detector (manufactured by AMETEK Inc.) was connected to the above TEM, for the use.

(9) Particle size of the additive

After dispersion of the powder of additive in water or alcohol, the resultant substance was dropped on the TEM grid and the solvent was evaporated. Thus produced sample was subjected to the TEM observation. The sizes of 100 particles were measured, and the particle size of the additive was obtained by taking an average of the sizes.

(10) Measurement method of purity

Quantitative analysis was performed by Gas chromatography (GC) under the following conditions.

Column: DB-5 (manufactured by J&W Inc.) L = 30 m, $\phi$ = 0.53 mm, D = 1.50 $\mu$m
Carrier: Helium (Line velocity = 35.0 cm/sec)
Analytical condition

Inj. temp. = 300°C
Detec. temp. = 320°C
Oven = 50°C x 1 min
Rate = 10°C/min
Final = 300°C x 15 min
SP ratio = 50:1

(11) Hot water resistance

The hot water resistance of the formed article of polymer electrolyte composition (electrolyte membrane) was evaluated by the measurement of dimensional change rate in hot water at 95°C. The electrolyte membrane was cut to a rectangular shape having about 5 cm in length and about 1 cm in width, and after immersion of the cut piece of the electrolyte membrane in water for 24 hours at 250°C, then the length (L1) was measured using Vernier calipers. After further immersion of the electrolyte membrane in hot water for 8 hours at 95°C, the length (L2) was again measured using Vernier calipers, and the magnitude of dimensional change was visually observed.

(12) Nuclear magnetic resonance (NMR) spectra

The $^1$H-NMR measurement was performed under the following conditions, to confirm the structure and to quantify the molar composition ratio of the segment (A1) containing an ionic group to the segment (A2) not containing an ionic group. The molar composition ratio was calculated from the integral peak values appearing at 8.2 ppm (originated from disulfonate-4,4'-difluorobenzophenone) and 6.5 to 8.0 ppm (originated from all aromatic protons except for disulfonate-4,4'-difluorobenzophenone).

Apparatus: EX-270 manufactured by JOEL Ltd.
Resonance frequency: 270 MHz ($^1$H-NMR)
Measurement temperature: Room temperature
Dissolving solvent: DMSO-d6
Internal reference substance: TMS (0 ppm)
Cumulative number: 16

In addition, the measurement of solid $^{13}$C-CP/MAS spectra was performed under the following condition, and the presence or absence of remaining ketal group was confirmed.

Apparatus: CMX-300 Infinity, manufactured by Chemagnetics Inc.
Measurement temperature: Room temperature
Internal reference substance: Si rubber (1.56 ppm)
Measurement core: 75.188829 MHz
Pulse width: 90° pulse, 4.5 μsec
Pulse repetition time: ACQTM = 0.03413 sec, PD = 9 sec
Spectrum width: 30.003 kHz
Sample rotation: 7 kHz
Contact time: 4 msec

(13) Chemical stability

The chemical stability of the electrolyte membrane was evaluated by immersion of about 10 mg of sample in a large excessive volume of 1% by weight of hydrogen peroxide aqueous solution at 80°C. The proton conductivity at 80°C and 25% RH, and the weight-average molecular weight were measured before immersion and after 100 hours of immersion, respectively, and thus there was calculated the molecular weight-retention rate, that is,

[(Weight-average molecular weight after immersion)/(Weight-average molecular weight before immersion)] x 100 (%).

(14) Content of metal element

Analysis was conducted in the following procedures 1) to 4). Measurement was performed twice or more, and the average of the measurement values was adopted.

1) About 50 mg of sample is weighed in a platinum crucible. The sample is heated to 1, 000°C and ashed using a burner and an electric furnace.
2) To the ash, there are added 1 mL of 95 wt.% sulfuric acid, 1 mL of 70 wt.% nitric acid, and 1 mL of 50 wt.% hydrofluoric acid, and the resultant mixture is then heated to 80°C for decomposing the ash.
3) Thus obtained solution is decomposed and diluted with 0.1 mol/L nitric acid, and 10 mL of the solution was obtained.
4) ICP Emission spectrophotometric analysis is performed, and from the measurement value obtained using the following formula, the amount of metal element in 1 g of sample is calculated.

$$M = (10 \times S)/m$$

M: Amount of metal element in 1 g of sample (μg/g)
S: Amount of metal element detected by ICP spectrophotometric analysis (μg/g)
m: Mass of sample (g)

Apparatus: ICP spectrophotometric analyzer SPS4000 manufactured by SII Nano Technology Inc.

(15) Organic nitrogen analysis

Analysis was conducted in accordance with the following steps. Measurement was performed twice or more, and the average of the measurement values is adopted.

1) About 50 mg of sample is introduced into an analyzer, where the sample is thermally decomposed and oxidized.
2) The generated nitric monoxide is quantified by the chemiluminescence. From the measurement value obtained using the following formula, the amount of metal element in 1 g of sample is calculated.

$$M' = (10 \times N)/m'$$

M': Amount of nitrogen in 1 g of sample (μg/g)
N: Amount of nitrogen detected by organic nitrogen analysis (μg/g)
m': Mass of sample (g)

Apparatus: Nitrogen microanalyzer ND-100 (manufactured by Mitsubishi Chemical Corporation)
Temperature of Electric furnace (Horizontal Reactor)
Thermal decomposition section: 800°C
Catalyst section: 900°C
Main $O_2$ flow rate: 300 mL/min
$O_2$ flow rate: 300 mL/min
Ar flow rate: 400 mL/min
Sens: Low

Synthesis Example 1

Synthesis of 2,2-bis(4-hydroxyphenyl)-1,3-dioxolane (K-DHBP) represented by the general formula (G1)

[Chemical formula 16]

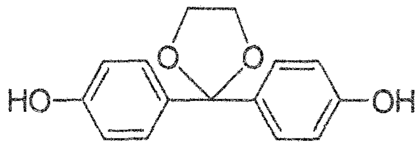

(G1)

To a 500 mL flask equipped with an agitator, a thermometer, and a distilling tube, there were added 49.5 g of 4,4'-dihydroxybenzophenone, 134 g of ethyleneglycol, 96.9 g of ortho-trimethyl formate, and 0.50 g of p-toluenesulfonic acid monohydrate, to be dissolved. The solution was agitated for 2 hours while being kept at the temperature of 78°C to 82°C. Furthermore, the internal temperature was gradually increased to 120°C and the heating was continued until the distilling of methyl formate, methanol, and orthotrimethyl formate completely stops. After cooling of the reaction solution to room temperature, the reaction solution was diluted by ethyl acetate, and then the organic layer was rinsed with 100 mL of 5% aqueous solution of potassium carbonate. After separating the solution, the solvent was distilled out. 80 mL of dichloromethane was added to the residue, crystal was deposited, and then after filtration and drying, 52.0 g of 2,2-bis(4-hydroxyphenyl)-1,3-dioxolane was obtained. Through the GC analysis of the crystal, 99.8% of 2,2-bis(4-hydroxyphenyl)-1,3-dioxolane and 0.2% of 4,4'-dihydroxybenzophenone were confirmed.

Synthesis Example 2

Synthesis of disodium 3,3'-disulfonate-4,4'-difluorobenzophenone represented by the general formula (G2)

[Chemical formula 17]

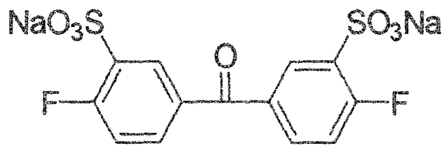

(G2)

A 109.1 g of 4,4'-difluorobenzophenone (Aldrich reagent) was caused to react in 150 mL of oleum (50% $SO_3$) (reagent of Wako Pure Chemical Industries, Ltd.) for 10 hours at 100°C. Then, the solution was gradually poured into a large volume of water, and after neutralizing the solution by using NaOH, 200 g of sodium chloride was added and the synthesized product was precipitated. The precipitated product obtained was separated by filtration, followed by recrystallization by using ethanol aqueous solution, and thus there was obtained disodium 3,3'-disulfonate-4,4'-difluorobenzophenone represented by the general formula (G2). The purity was 99.3%. The structure was confirmed by $^1$H-NMR. The impurities were quantitatively analyzed by capillary electrophoresis (organic substances) and by ion chromatography (inorganic substances).

Synthesis Example 3

(Synthesis of oligomer a1' not containing an ionic group, represented by the general formula (G3))

[Chemical formula 18]

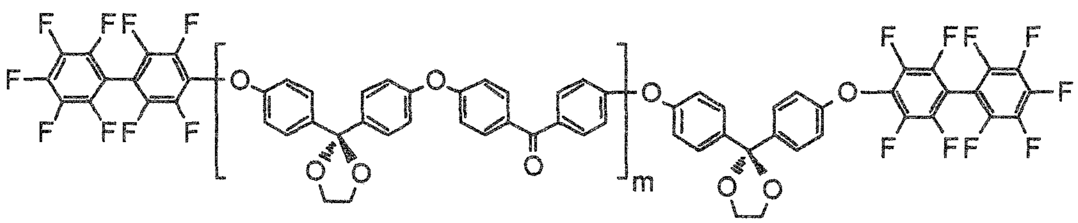

(G3)

where, in (G3), m is a positive integer.

To a 100 mL three neck flask equipped with an agitator, a nitrogen gas inlet tube, and a Dean-Stark trap, there were added 16.59 g of potassium carbonate (Aldrich reagent, 120 mmol), 25.8 g of K-DHBP (100 mmol) obtained in the Synthesis Example 1, and 20.3 g of 4,4'-difluorobenzophenone (Aldrich reagent, 93 mmol). After nitrogen purge, the resultant content was dewatered in 300 mL of N-methylpyrrolidone (NMP) and 100 mL of toluene at 160°C. Again, the resultant content was heated and the toluene was removed, then was polymerized for 1 hour at 180°C. Purification was performed by reprecipitation through the use of a large quantity of methanol, and thus there was obtained the oligomer a1 not containing an ionic group (terminal OM group; meanwhile, the symbol M in the OM group signifies Na or K, and the subsequent expression follows this example. The number-average molecular weight was 10,000.

To a 500 mL three neck flask equipped with an agitator, a nitrogen gas inlet tube, and a Dean-Stark trap, there were added 1.1 g of potassium carbonate (Aldrich reagent, 8 mmol), and 20.0 g (2 mmol) of the oligomer a1 not containing an ionic group (terminal OM group). After nitrogen purge, the resultant content was dewatered at 100°C in 100 mL of N-methylpyrrolidone (NMP) and 30 mL of cyclohexane, and then the resultant content was heated and the cyclohexane was removed. Furthermore, 4.0 g of decafluorobiphenyl (Aldorich reagent, 12 mmol) was added and the solution was caused to react for 1 hour at 105°C. Purification was performed by reprecipitation through the use of a large quantity of isopropyl alcohol, and thus there was obtained the oligomer a1' not containing an ionic group (terminal fluoro group), represented by the formula (G3). The number-average molecular weight was 11, 000, and the number-average molecular weight of the oligomer a1' not containing an ionic group was obtained as 10,400 (subtracting the linker moiety (molecular weight of 630)).

(Synthesis of oligomer a2 containing an ionic group, represented by the general formula (G4))

[Chemical formula 19]

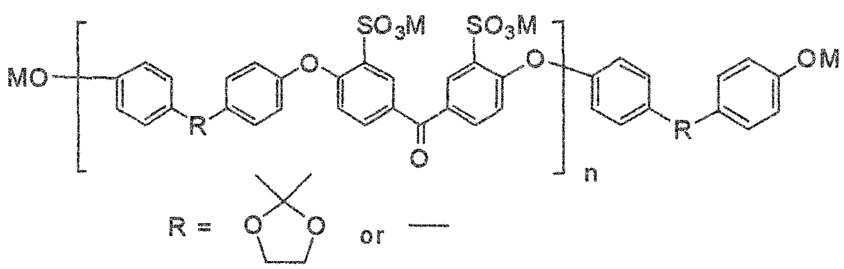

(G4)

where, in (G4), M is Na or K.

To a 100 mL three neck flask equipped with an agitator, a nitrogen gas inlet tube, and a Dean-Stark trap, there were added 27.6 g of potassium carbonate (Aldrich reagent, 200 mmol), 12.9 g (50 mmol)of K-DHBP obtained in the Synthesis Example 1, 9.3 g of 4,4'-biphenol (Aldrich reagent, 50 mmol), 39.3 g (93 mmol)of disodium 3,3'-disulfonate-4,4'-difluorobenzophenone obtained in the Synthesis Example 2, and 17.9 g of 18-crown-6-ether (82 mmol, Wako Pure Chemical Industries, Ltd.) After nitrogen purge, the resultant content was dewatered in 300 mL of N-methylpyrrolidone (NMP) and 100 mL of toluene at 170°C, and then the resultant content was heated and the toluene was removed. The resultant content was polymerized for 1 hour at 180°C. Purification was performed by reprecipitation through the use of a large amount of isopropyl alcohol, and thus there was obtained the oligomer a2 containing an ionic group (terminal OM group), represented by the formula (G4). The number-average molecular weight was 16,000.

(Synthesis of block copolymer b1 containing: oligomer a2 as the segment (A1) containing an ionic group; oligomer a1 as the segment (A2) not containing an ionic group; and octafluorobiphenylene as the linker moiety)

To a 500 mL three neck flask equipped with an agitator, a nitrogen gas inlet tube, and a Dean-Stark trap, there were added 0.56 g of potassium carbonate (Aldrich reagent, 4 mmol), and 16 g (1 mmol) of the oligomer a2 containing an ionic group (terminal OM group). After nitrogen purge, the resultant content was dewatered at 100°C in 100 mL of N-methylpyrrolidone (NMP) and 30 mL of cyclohexane, and then the resultant content was heated and the cyclohexane was removed. Furthermore, the addition of 11 g (1 mmol) of oligomer a1' not containing an ionic group (terminal fluoro group) causes the solution to react for 24 hour at 105°C. Purification was performed by reprecipitation through the use of a large quantity of isopropyl alcohol, and thus there was obtained the block copolymer b1. The weight-average molecular weight was 320,000.

The block copolymer b1 contained 50% by mole of constituent unit represented by the general formula (S1) as the segment (A1) containing an ionic group, and 100% by mole of constituent unit represented by the general formula (S2) as the segment (A2) not containing an ionic group.

The ion-exchange capacity obtained from neutralization titration was 1.8 meq/g when the block copolymer b1 was used as the polymer electrolyte membrane, and the molar composition ratio (A1/A2) obtained from $^1$H-NMR was 56 mole/44 mol = 1.27, which exhibited no residual ketal group.

Example 1

(Manufacturing of polyphenylene sulfide c1 into which a sulfonic acid group is introduced, represented by the general formula (G5))

[Chemical formula 20]

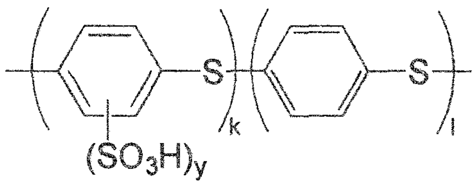
(G5)

where, in the formula (G5), k and 1 signify the respective independent positive integers.

In 100 mL of oleum (50% $SO_3$) (reagent of Wako Pure Chemical Industries, Ltd.), 122.2 g of poly(1,4-phenylene sulfide) (melt viscosity of 275 poise at 310°C, manufactured by Sigma-Aldrich Japan K.K.) was caused to react at 25°C for 12 hours. After that, the resultant substance was gradually poured in a large volume of water, and further 200 g of sodium chloride was added thereto and the synthesized product was precipitated. Thus obtained precipitate was rinsed with water and there was obtained the polyphenylene sulfide c1 into which a sulfonic acid group is introduced, represented by the general formula (G5). The ion-exchange capacity obtained from neutralization titration was 2.2 meq/g, and the purity was 99.3%. From the $^1$H-MNR, it was confirmed that the structure exhibits the ratio between the unit into which a sulfonic acid group is introduced and the unit without being introduced a sulfonic acid group therein as 30 to 70. As a result of the TEM observation, it was shown that the polyphenylene sulfide c1 has the particle shape with a mean particle size of 5 nm. The impurities were quantitatively analyzed using the capillary electrophoresis (for organic substance) and the ion-chromatography (for inorganic substance).

(Manufacturing of polymer electrolyte membrane f1 containing polyphenylene sulfide particle into which a sulfonic acid group is introduced)

A 19 g of the block copolymer b1 obtained in Synthesis Example 3 was dissolved in 60 g of N-methylpyrrolidone (NMP). To the resultant solution, 1 g of polyphenylene sulfide c1 into which a sulfonic acid group is introduced was added, and by the agitation of the resultant mixture through the use of an agitator at 20, 000 rpm for 3 minutes, a transparent solution of 25% by mass of polymer was obtained. The solution obtained was pressure-filtered using a glass fiber filter, followed by being cast-coated on a glass plate. After drying of the coated substance at 100°C for 4 hours, the substance was heat-treated under nitrogen atmosphere at 150°C for 10 minutes and the polyketal ketone membrane (25 $\mu$m of membrane thickness) was obtained. The solubility of the polymer was extremely high. After immersing the membrane in an aqueous solution of 10 wt.% sulfuric acid at 95°C for 24 hours to thereby conduct proton substitution and deprotection reaction, the membrane was immersed in a large excess volume of pure water for 24 hours for sufficient rinsing, and thus the polymer electrolyte membrane f1 was obtained.

The ion-exchange capacity obtained from neutralization titration was 1.8 meq/g. The membrane was extremely strong, and visual observation thereof showed transparent and homogeneous membrane. The proton conductivity was 250 mS/cm at 80°C and 85% RH, and 2.8 mS/cm at 80°C and 25% RH, which showed excellent proton conductivity under low humidification conditions. In addition, the dimensional change rate was small, giving 10%, and the hot water resistance was also excellent.

Furthermore, as a result of the TEM observation, the presence of co-continuous phase separation structure with 20 nm of domain size was able to be confirmed. Both the domain containing an ionic group and the domain not containing an ionic group formed the continuous phase. In addition, the cycle length of microphase separation estimated

from the autocorrelation function was also 20 nm. Moreover, the abundance ratio of the polyphenylene sulfide particle into which a sulfonic acid group is introduced, calculated from the distribution of sulfur atoms, through the use of the EDX, was (the hydrophilic domain) : (the hydrophobic domain) = 85:15.

After the chemical stability test, the proton conductivity at 80°C and 25% RH was 2.5 mS/cm, and the molecular weight retention rate was 85%, which exhibits excellent chemical stability.

Example 2

Electrolyte membrane f2 was manufactured in the same way as in Example 1 except that there were used 14 g of the block copolymer b1 and 6 g of the polyphenylene sulfide c1 into which a sulfonic acid group is introduced.

The ion-exchange capacity obtained from neutralization titration was 1.9 meq/g. The membrane was extremely strong, and visual observation thereof showed transparent and homogeneous membrane. The proton conductivity was 230 mS/cm at 80°C and 85% RH, and 2.6 mS/cm at 80°C and 25% RH, which showed excellent proton conductivity under low humidification conditions. In addition, the dimensional change rate was small, giving 10%, and the hot water resistance was also excellent.

Furthermore, as a result of the TEM observation, the presence of co-continuous phase separation structure with 30 nm of domain size was able to be confirmed. Both the domain containing an ionic group and the domain not containing an ionic group formed the continuous phase. In addition, the cycle length of microphase separation estimated from the autocorrelation function was also 30 nm. Moreover, the abundance ratio of the polyphenylene sulfide particle into which a sulfonic acid group is introduced, calculated from the distribution of sulfur atoms, through the use of the EDX, was (the hydrophilic domain) : (the hydrophobic domain) = 70:30.

After the chemical stability test, the proton conductivity at 80°C and 25% RH was 2.4 mS/cm, and the molecular weight retention rate was 95%, which exhibits excellent chemical stability.

Example 3

Electrolyte membrane f3 was manufactured by the procedure of Example 1 except that 19.8 g of the block copolymer b1 was used and that 0.2 g of the polyphenylene sulfide c1 into which a sulfonic acid group is introduced.

The ion-exchange capacity obtained from neutralization titration was 1.8 meq/g. The membrane was extremely strong, and visual observation thereof showed transparent and homogeneous membrane. The proton conductivity was 250 mS/cm at 80°C and 85% RH, and 2.9 mS/cm at 80°C and 25% RH, which showed excellent proton conductivity under low humidification conditions. In addition, the dimensional change rate was small, giving 10%, and the hot water resistance was also excellent.

Furthermore, as a result of the TEM observation, the presence of co-continuous phase separation structure with 20 nm of domain size was able to be confirmed. Both the domain containing an ionic group and the domain not containing an ionic group formed the continuous phase. In addition, the cycle length of microphase separation estimated from the autocorrelation function was also 20 nm. Moreover, the abundance ratio of the polyphenylene sulfide particle into which a sulfonic acid group is introduced, calculated from the distribution of sulfur atoms, through the use of the EDX, was (the hydrophilic domain) : (the hydrophobic domain) = 95:5.

After the chemical stability test, the proton conductivity at 80°C and 25% RH was 2.0 mS/cm, and the molecular weight retention rate was 70%, which exhibits excellent chemical stability.

Example 4

(Manufacturing of polymer electrolyte membrane f4 containing manganese (IV) oxide particles)

Electrolyte membrane f4 was manufactured in the same way as in Example 1 except that manganese (IV) oxide particles were used instead of the polyphenylene sulfide c1 into which a sulfonic acid group is introduced and that the amount of the NMP was 57 g. The TEM observation showed that the mean particle size of the manganese (IV) oxide particles was 3 nm.

The ion-exchange capacity obtained from neutralization titration was 1. 6 meq/g. The content of manganese (IV) oxide calculated from the ICP Emission spectrophotometric analysis was 4.9% by mass. The electrolyte membrane was extremely strong, and visual observation thereof showed transparent and homogeneous membrane. The proton conductivity was 190 mS/cm at 80°C and 85% RH, and 2.2 mS/cm at 80°C and 25% RH, which showed excellent proton conductivity under low humidification conditions. In addition, the dimensional change rate was small, giving 10%, and the hot water resistance was also excellent.

Furthermore, as a result of the TEM observation, the presence of co-continuous phase separation structure with 20 nm of domain size was able to be confirmed. Both the domain containing an ionic group and the domain not

containing an ionic group formed the continuous phase. In addition, the cycle length of microphase separation estimated from the autocorrelation function was also 20 nm. Moreover, the abundance ratio of the manganese (IV) oxide particles calculated from the distribution of manganese atoms, through the use of the EDX, was (the hydrophilic domain) : (the hydrophobic domain) = 88:12.

After the chemical stability test, the proton conductivity at 80°C and 25% RH was 1.8 mS/cm, and the molecular weight retention rate was 87%, which exhibits excellent chemical stability.

Example 5

(Manufacturing of polymer electrolyte membrane f5 containing cerium (III) oxide particles)

Electrolyte membrane f5 was manufactured in the same way as in Example 4 except that cerium (III) oxide particles were used instead of manganese (IV) oxide particles. As a result of the TEM observation, the mean particle size of the cerium (III) oxide particles was 3 nm.

The ion-exchange capacity obtained from neutralization titration was 1.6 meq/g. The content of cerium (III) oxide calculated from the ICP Emission spectrophotometric analysis was 5.0% by mass. The electrolyte membrane was extremely strong, and visual observation thereof showed transparent and homogeneous membrane. The proton conductivity was 210 mS/cm at 80°C and 85% RH, and 2.4 mS/cm at 80°C and 25% RH, which showed excellent proton conductivity under low humidification conditions. In addition, the dimensional change rate was small, giving 10%, and the hot water resistance was also excellent.

Furthermore, as a result of the TEM observation, the presence of co-continuous phase separation structure with 20 nm of domain size was able to be confirmed. Both the domain containing an ionic group and the domain not containing an ionic group formed the continuous phase. In addition, the cycle length of microphase separation estimated from the autocorrelation function was also 20 nm. Moreover, the abundance ratio of the cerium (III) oxide particles calculated from the distribution of cerium atoms, through the use of the EDX, was (the hydrophilic domain) : (the hydrophobic domain) = 89:11.

After the chemical stability test, the proton conductivity at 80°C and 25% RH was 2.0 mS/cm, and the molecular weight retention rate was 88%, which exhibits excellent chemical stability.

Example 6

(Manufacturing of polymer electrolyte membrane f6 containing manganese (IV) oxide and cerium (III) oxide mixed particles)

Electrolyte membrane f6 was manufactured in the same way as in Example 4 except that the amount of the manganese (IV) oxide was changed to 0.503 g and that 0.497 g of cerium (III) oxide particles was added.

The ion-exchange capacity obtained from neutralization titration was 1. 6 meq/g. The content of manganese (IV) oxide calculated from the ICP Emission spectrophotometric analysis was 2.5% by mass, and the content of cerium (III) oxide calculated therefrom was 2.4% by mass. The electrolyte membrane was extremely strong, and visual observation thereof showed transparent and homogeneous membrane. The proton conductivity was 200 mS/cm at 80°C and 85% RH, and 2.3 mS/cm at 80°C and 25% RH, which showed excellent proton conductivity under low humidification conditions. In addition, the dimensional change rate was small, giving 10%, and the hot water resistance was also excellent.

Furthermore, as a result of the TEM observation, the presence of co-continuous phase separation structure with 20 nm of domain size was able to be confirmed. Both the domain containing an ionic group and the domain not containing an ionic group formed the continuous phase. In addition, the cycle length of microphase separation estimated from the autocorrelation function was also 20 nm. Moreover, the abundance ratio of the manganese (IV) oxide particles and cerium (III) oxide particles calculated from the distribution of manganese atoms and cerium atoms, respectively, through the use of the EDX, was (the hydrophilic domain) : (the hydrophobic domain) = 89:11.

After the chemical stability test, the proton conductivity at 80°C and 25 % RH was 1.9 mS/cm, and the molecular weight retention rate was 87%, which exhibits excellent chemical stability.

Example 7

(Manufacturing of polymer electrolyte membrane f7 containing cerium (III) tungstate particles)

Electrolyte membrane f7 was manufactured in the same way as in Example 4 except that cerium (III) tungstate particles were used instead of manganese (IV) oxide particles. As a result of the TEM observation, the mean particle

size of the cerium (III) tungstate particles was 4 nm.

The ion-exchange capacity obtained from neutralization titration was 1.7 meq/g. The content of cerium (III) tungstate calculated from the ICP Emission spectrophotometric analysis was 5.0% by mass. The electrolyte membrane was extremely strong, and visual observation thereof showed transparent and homogeneous membrane. The proton conductivity was 230 mS/cm at 80°C and 85% RH, and 2.5 mS/cm at 80°C and 25% RH, which showed excellent proton conductivity under low humidification conditions. In addition, the dimensional change rate was small, giving 10%, and the hot water resistance was also excellent.

Furthermore, as a result of the TEM observation, the presence of co-continuous phase separation structure with 20 nm of domain size was able to be confirmed. In addition, the cycle length of microphase separation estimated from the autocorrelation function was also 20 nm. Both the domain containing an ionic group and the domain not containing an ionic group formed the continuous phase. Moreover, the abundance ratio of the cerium (III) tungstate particles calculated from the distribution of cerium atoms, through the use of the EDX, was (the hydrophilic domain) : (the hydrophobic domain) = 92:8.

After the chemical stability test, the proton conductivity at 80°C and 25% RH was 1.8 mS/cm, and the molecular weight retention rate was 75%, which exhibits excellent chemical stability.

Example 8

(Manufacturing of polymer electrolyte membrane f8 into which a cerium ion is introduced by immersion in cerium nitrate)

A 20 g of the block copolymer b1 obtained in Synthesis Example 3 was dissolved in 80 g of N-methyl-2-pyrrolidone (NMP). The solution was pressure-filtered using a glass fiber filter, followed by being cast-coated on a glass plate. After drying the coating at 100°C for 4 hours, the resultant coated substance was heat-treated under nitrogen atmosphere at 150°C for 10 minutes and the polyketal ketone membrane (25 μm of membrane thickness) was obtained. The solubility of the polymer was extremely high. By immersing the membrane in an aqueous solution of 10 wt.% sulfuric acid at 95°C for 24 hours, proton substitution and deprotection reaction was performed. After that, the membrane was immersed to rinse in a large excess volume of pure water for 24 hours, which was then allowed to stand at 25°C for 12 hours for drying and the polyether ketone membrane f8" not containing hydrophilic additive was obtained.

Next, 0.52 g of cerium (III) nitrate hexahydrate (1.2 mmol, reagent manufactured by Aldrich) was dissolved in pure water to 30 L, and thus a 40 μmol/L cerium (III) nitrate solution was prepared. To this solution, 20 g of the polyether ketone membrane was immersed for 72 hours, and by ion-exchange with sulfonic acid group, there was obtained the polymer electrolyte membrane f8 into which a cerium ion is introduced.

The ion-exchange capacity obtained from neutralization titration was 1.6 meq/g. The content of cerium calculated from the ICP Emission spectrophotometric analysis was 0.8% by mass. The electrolyte membrane was extremely strong, and visual observation thereof showed transparent and homogeneous membrane. The proton conductivity was 180 mS/cm at 80°C and 85% RH, and 2.2 mS/cm at 80°C and 25% RH, which showed relatively high proton conductivity under low humidification conditions. In addition, the dimensional change rate was extremely small, giving 2%, and the hot water resistance was also excellent.

Furthermore, as a result of the TEM observation, the presence of co-continuous phase separation structure with 20 nm of domain size was able to be confirmed. In addition, the cycle length of microphase separation estimated from the autocorrelation function was also 20 nm. Both the domain containing an ionic group and the domain not containing an ionic group formed the continuous phase. Moreover, the abundance ratio of the cerium (III) ion calculated from the distribution of cerium atoms, through the use of the EDX, was (the hydrophilic domain) : (the hydrophobic domain) = 99:1.

After the chemical stability test, the proton conductivity at 80°C and 25% RH was 1.9 mS/cm, and the molecular weight retention rate was 90%, which exhibits excellent chemical stability.

Example 9

(Manufacturing of polymer electrolyte membrane f9 into which a manganese ion is introduced by immersion in manganese nitrate solution)

Electrolyte membrane f9 was manufactured in the same way as in Example 8 except that 0.34 g of manganese (II) nitrate hexahydrate (Aldrich reagent 1.2 mmol) was used instead of 0.52 g of cerium (III) nitrate hexahydrate.

The ion-exchange capacity obtained from neutralization titration was 1. 7 meq/g. The content of manganese calculated from the ICP Emission spectrophotometric analysis was 0.3% by mass. The electrolyte membrane was extremely strong, and visual observation thereof showed transparent and homogeneous membrane. The proton conductivity was 220 mS/cm at 80°C and 85% RH, and 2.4 mS/cm at 80°C and 25% RH, which showed excellent proton

conductivity under low humidification conditions. In addition, the dimensional change rate was small, giving 5%, and the hot water resistance was also excellent.

Furthermore, as a result of the TEM observation, the presence of co-continuous phase separation structure with 20 nm of domain size was able to be confirmed. Both the domain containing an ionic group and the domain not containing an ionic group formed the continuous phase. In addition, the cycle length of microphase separation estimated from the autocorrelation function was also 20 nm. Moreover, the abundance ratio of the manganese (II) ions calculated from the distribution of manganese atoms, through the use of the EDX, was (the hydrophilic domain) : (the hydrophobic domain) = 97:3.

After the chemical stability test, the proton conductivity at 80°C and 25% RH was 1.8 mS/cm, and the molecular weight retention rate was 88%, which exhibits excellent chemical stability.

Example 10

(Manufacturing of polymer electrolyte membrane f10 into which ethylene diamine tetra acetic acid disodium manganese complex is introduced by immersing in the solution thereof)

Electrolyte membrane f10 was manufactured in the same way as in Example 8 except that 0.55 g of ethylene diamine tetra acetic acid disodium manganese tetrahydrate (1.2 mmol, Junsei Chemical's reagent) was used instead of 0.52 g of cerium (III) nitrate hexahydrate.

The ion-exchange capacity obtained from neutralization titration was 1.6 meq/g. The content of cerium calculated from the ICP Emission spectrophotometric analysis was 0.7% by mass. The electrolyte membrane was extremely strong, and visual observation thereof showed transparent and homogeneous membrane. The proton conductivity was 200 mS/cm at 80°C and 85% RH, and 2.3 mS/cm at 80°C and 25% RH, which showed excellent proton conductivity under low humidification conditions. In addition, the dimensional change rate was small, giving 4%, and the hot water resistance was also excellent.

Furthermore, as a result of the TEM observation, the presence of co-continuous phase separation structure with 20 nm of domain size was able to be confirmed. Both the domain containing an ionic group and the domain not containing an ionic group formed the continuous phase. In addition, the cycle length of microphase separation estimated from the autocorrelation function was also 20 nm. Moreover, the abundance ratio of the cerium-phenanthroline complex calculated from the distribution of cerium atoms, through the use of the EDX, was (the hydrophilic domain) : (the hydrophobic domain) = 92:8.

After the chemical stability test, the proton conductivity at 80°C and 25% RH was 2.0 mS/cm, and the molecular weight retention rate was 91%, which exhibits excellent chemical stability.

Comparative Example 1

(Manufacturing of polymer electrolyte membrane f1' not containing additive to prevent oxidation degradation)

Electrolyte membrane f1' was manufactured in the same way as in Example 1 except that the polyphenylene sulfide c1 into which a sulfonic acid group is introduced was not used.

The ion-exchange capacity obtained from neutralization titration was 1.8 meq/g. The electrolyte membrane was extremely strong, and visual observation thereof showed transparent and homogeneous membrane. The proton conductivity was 250 mS/cm at 80°C and 85% RH, and 3 mS/cm at 80°C and 25% RH, which showed excellent proton conductivity under low humidification conditions. In addition, the dimensional change rate was small, giving 10%, and the hot water resistance was also excellent.

Furthermore, as a result of the TEM observation, the presence of co-continuous phase separation structure with 20 nm of domain size was able to be confirmed. Both the domain containing an ionic group and the domain not containing an ionic group formed the continuous phase. In addition, the cycle length of microphase separation estimated from the autocorrelation function was also 20 nm.

After the chemical stability test, the proton conductivity at 80°C and 25% RH was 1.3 mS/cm, and the molecular weight retention rate was 55%, which were somewhat small values.

Comparative Example 2

(Manufacturing of polymer electrolyte membrane f2' containing non-substitution polyphenylene sulfide particles)

Electrolyte membrane f2' was manufactured in the same way as in Example 1 except that non-substitution poly (1,4-phenylene sulfide) was used instead of the polyphenylene sulfide c1 into which a sulfonic acid group is introduced.

The ion-exchange capacity obtained from neutralization titration was 1.6meq/g. The electrolyte membrane was extremely strong, and visual observation thereof showed transparent and homogeneous membrane. The proton conductivity was 180 mS/cm at 80°C and 85% RH, and 2.0 mS/cm at 80°C and 25% RH, which showed excellent proton conductivity under low humidification conditions. In addition, the dimensional change rate was small, giving 10%, and the hot water resistance was also excellent.

Furthermore, as a result of the TEM observation, the presence of co-continuous phase separation structure with 20 nm of domain size was able to be confirmed. Both the domain containing an ionic group and the domain not containing an ionic group formed the continuous phase. In addition, the cycle length of microphase separation estimated from the autocorrelation function was also 20 nm. Moreover, the abundance ratio of the non-substitution polyphenylene sulfide particles calculated from the distribution of sulfur atoms using the EDX was (the hydrophilic domain) : (the hydrophobic domain) = 10:90.

After the chemical stability test, the molecular weight retention rate was relatively held at 80%. However, the proton conductivity at 80°C and 25% RH was rather decreased to 1,1 mS/cm.

Comparative Example 3

(Synthesis of block copolymer b2 containing: oligomer a2 as the segment (A1) containing an ionic group; oligomer a1 as the segment (A2) not containing an ionic group; and octafluorobiphenylene as the linker moiety, through high temperature polymerization)

To a 500 mL three neck flask equipped with an agitator, a nitrogen introduction tube, and a Dean-Stark trap, there were charged 0.56 g of potassium carbonate (Aldrich reagent 4 mmol), and 16 g (1 mmol) of oligomer a2 containing an ionic group, (terminal hydroxyl group). After nitrogen purge, the resultant substance was dewatered in 100 mL of N-methylpyrrolidone (NMP) and 30 mL of cyclohexane at 100°C. Then the solution was heated and the cyclohexane was removed. After that, by adding 11 g (1 mmol) of oligomer a1' not containing an ionic group (terminal fluoro group), the reaction was carried out at 140°C for 24 hours. Purification was performed by re-precipitation using a large amount of isopropyl alcohol, and thus the block copolymer b2 was obtained. The weight average molecular weight was 310,000.

The block copolymer b2 contained 50% by mole of the constituent unit represented by the general formula (S1) as the segment (A1) containing an ionic group, and 100% by mole of the constituent unit represented by the general formula (S2) as the segment (A2) not containing an ionic group.

The ion-exchange capacity obtained from neutralization titration was 1.8 meq/g when the block copolymer b2 was used as the polymer electrolyte membrane, and the molar composition ratio (A1/A2) derived from $^1$H-NMR was 56 mole/44 mol = 1.27, which showed no residual ketal group.

(Manufacturing of polymer electrolyte membrane f3' made of the block copolymer synthesized by high temperature polymerization and the polyphenylene sulfide particles into which a sulfonic acid group is introduced)

The electrolyte membrane f3' was manufactured in the same way as in Example 1 except that the block copolymer b2 synthesized at 140°C was used instead of the block copolymer b1 synthesized at 105°C.

The ion-exchange capacity obtained from neutralization titration was 1.8meq/g. The electrolyte membrane was rather soft, and visual observation thereof showed transparent and homogeneous membrane. The dimensional change rate was rather large, giving 15%, showing hot water resistance. The proton conductivity was 230 mS/cm at 80°C and 85% RH, which was a high value, though giving 1.0 mS/cm at 80°C and 25% RH, which showed somewhat deteriorated proton conductivity under low humidification conditions compared with the values of Example 1.

Through the TEM observation, clear co-continuous and lamellar structure was not able to be confirmed.

After the chemical stability test, the molecular weight retention rate was relatively held at 82%. The proton conductivity at 80°C and 25% RH was, however, decreased to thereby give a low value of 0.5 mS/cm.

Comparative Example 4

(Synthesis of block copolymer f4' made of block copolymer synthesized by high temperature polymerization and of manganese oxide)

The electrolyte membrane f4' was manufactured in the same way as in Example 4 except that the block copolymer b2 synthesized at 140°C was used instead of the block copolymer b1 synthesized at 105°C.

The ion-exchange capacity obtained from neutralization titration was 1.6 meq/g. The electrolyte membrane was rather soft, and visual observation thereof showed transparent and homogeneous membrane. The dimensional change rate was rather large, giving 15%, and showed hot water resistance. The proton conductivity was 170 mS/cm

at 80°C and 85% RH, which was relatively high values, though giving 0. 8 mS/cm at 80°C and 25% RH, which showed somewhat deteriorated proton conductivity under low humidification conditions compared with the values of Example 4.

Through the TEM observation, clear co-continuous and lamellar structure was not able to be confirmed.

After the chemical stability test, the molecular weight retention rate was relatively held at 84%. The proton conductivity at 80°C and 25% RH was, however, decreased to give a low value of 0.4 mS/cm.

Comparative Example 5

(Manufacturing of polymer electrolyte membrane f5' in which a part of the sulfonic acid protons in the block copolymer synthesized by high temperature polymerization was substituted with manganese ions)

The electrolyte membrane f5' was manufactured in the same way as in Example 9 except that the block copolymer b2 synthesized at 140°C was used instead of the block copolymer b1 synthesized at 105°C.

The ion-exchange capacity obtained from neutralization titration was 0.9 meq/g. The electrolyte membrane was rigid and strong, and visual observation thereof showed transparent and homogeneous membrane. The dimensional change rate was small, giving 7%, and showed excellent hot water resistance. The proton conductivity was, however, 120 mS/cm at 80°C and 85% RH and 0.5 mS/cm at 80°C and 25% RH, which showed deteriorated proton conductivity under low humidification conditions and under high humidification conditions, compared with the values of Example 9.

Through the TEM observation, clear co-continuous and lamellar structure was not able to be confirmed.

After the chemical stability test, the molecular weight retention rate was relatively held at 88%. The proton conductivity at 80°C and 25% RH was, however, decreased to give a low value of 0.4 mS/cm.

Comparative Example 6

(Synthesis of oligomer a3' not containing an ionic group, represented by the general formula (G3))

The oligomer a3 not containing an ionic group (terminal OM group), was synthesized by the method of Synthesis Example 3 except that the charge amount of 4,4'-difluorobenzophenone was changed to 19.6 g (Aldrich reagent, 90 mmol). The number-average molecular weight was 5,000.

In addition, the oligomer a3' not containing an ionic group (terminal fluoro group) represented by the formula (G3) was synthesized by the method of Synthesis Example 3 except that 40.0 g (8 mmol) of the oligomer a3 not containing an ionic group (terminal OM group), was charged instead of the oligomer a1 not containing an ionic group (terminal OM group). The number-average molecular weight was 6, 000 and the number-average molecular weight of the oligomer a3' not containing an ionic group was obtained as 5,400 (subtracting the linker moiety (molecular weight of 630)).

(Synthesis of oligomer a4 containing an ionic group, represented by the general formula (G4))

The oligomer a4 containing an ionic group, (terminal OM group), represented by the formula (G4) was obtained by the method of Synthesis Example 3 except that the charge amount of 3,3'-difulfornate-4,4'-difluorobenzophenone was changed to 41.4 g (98 mmol). The number-average molecular weight was 28,000.

(Synthesis of block copolymer b3 containing: oligomer a4 as the segment (A1) containing an ionic group; oligomer a3 as the segment (A2) not containing an ionic group; and octafluorobiphenylene as the linker moiety)

The block copolymer b3 was obtained by the method of Synthesis Example 3 except that the oligomer a2 containing an ionic group (terminal OM group), was changed to 28 g (1 mmol) of the oligomer a4 containing an ionic group (terminal OM group), and that the oligomer a1' not containing an ionic group (terminal fluoro group), was changed to 6 g (1 mmol) of the oligomer a3' not containing an ionic group (terminal fluoro group). The weight-average molecular weight was 270,000.

The block polymer b3 contained 50% by mole of constituent unit represented by the general formula (S1) as the segment (A1) containing an ionic group, and 100% by mole of constituent unit represented by the general formula (S2) as the segment (A2) not containing an ionic group.

The ion-exchange capacity obtained from neutralization titration was 3.0 meq/g when the block copolymer b3 was used as the polymer electrolyte membrane, and the molar composition ratio (A1/A2) derived from $^1$H-NMR was 80.3 mole/19.7 mole = 4.08, which showed no residual ketal group.

(Manufacturing of polymer electrolyte membrane f6' made of the block copolymer forming sea-island structure and the polyphenylene sulfide particles into which a sulfonic acid group is introduced)

The electrolyte membrane f6' was manufactured in the same way as in Example 1 except that the bloc copolymer b3 giving A1/A3 = 4.08 was used instead of the block copolymer b1 giving A1/A2 = 1.27.

The ion-exchange capacity obtained from neutralization titration was 3.0 meq/g. The electrolyte membrane was extremely soft and brittle, and visual observation thereof showed transparent and homogeneous membrane. The dimensional change rate was large, giving 25%, and showed poor hot water resistance. The proton conductivity at 80°C and 85% RH was relatively high value of 400 mS/cm. However, the proton conductivity at 80°C and 25% RH was 0.2 mS/cm, which showed significantly deteriorated proton conductivity under low humidification conditions compared with the values of Example 1.

The TEM observation confirmed the sea-island structure in which the hydrophilic domain formed sea, and the hydrophobic domain formed island. The ratio of existed polyphenylene sulfide particles into which a sulfonic acid group is introduced, calculated from the distribution of sulfur atoms using the EDX was (the hydrophilic domain) : (the hydrophobic domain) = 95:5.

After the chemical stability test, the molecular weight retention rate was rather low, giving 59%. The proton conductivity at 80°C and 25% RH could not be determined owing to excessively large resistance.

Comparative Example 7

(Manufacturing of polymer electrolyte membrane f7' formed of the block copolymer forming sea-island structure and of manganese oxide)

The electrolyte membrane f7' was manufactured in the same way as in Example 4 except that the bloc copolymer b3 giving the molar ratio A1/A3 = 4.08 was used instead of the block copolymer b1 giving A1/A2 = 1.27.

The ion-exchange capacity obtained from neutralization titration was 2.7 meq/g. The electrolyte membrane was extremely soft and brittle, and visual observation thereof showed muddy membrane. The dimensional change rate was large, giving 25%, and exhibited poor hot water resistance. The proton conductivity at 80°C and 85% RH was relatively high value of 350 mS/cm. However, the proton conductivity at 80°C and 25% RH was 0.1 mS/cm, which showed significantly deteriorated proton conductivity under low humidification conditions compared with the value of Example 4.

The TEM observation confirmed the sea-island structure in which the hydrophilic domain formed sea, and the hydrophobic domain formed island. The ratio of existed polyphenylene sulfide particles into which a sulfonic acid group is introduced, calculated from the distribution of sulfur atoms using the EDX was (the hydrophilic domain) : (the hydrophobic domain) = 97:3.

After the chemical stability test, the molecular weight retention rate was relatively held at 67%. The proton conductivity at 80°C and 25% RH could not be determined owing to excessively large resistance.

Industrial Applicability

The formed article of polymer electrolyte composition according to the present invention is applicable to various electrochemical apparatuses (such as fuel cell, water electrolyzer, and chloroalkali electrolyzer). Among these apparatus, the use for fuel cell is preferred, and specifically, the use is suitable for fuel cell utilizing hydrogen as the fuel.

The uses of the polymer electrolyte fuel cell of the present invention are not specifically limited, and preferred uses are: substitution of conventional primary cell or secondary cell; and hybrid power sources therewith. These preferred uses include: handy equipments such as cell phone, personal computer, PDA, video camera, and digital camera; household electric appliances such as cordless vacuum cleaner; toys; power sources of mobile bodies such as vehicle including motor bicycle, motorbike, automobile, bus or truck, ship, and railway; and stationary power generator.

Reference Signs List

- M1: Co-continuous structure
- M2: Lamellar structure
- M3: cylindrical structure
- M4: Sea-island structure

**Claims**

1. A formed article of polymer electrolyte composition comprising:

    a block copolymer having one or more of each of a hydrophilic segment A1 containing an ionic group and a hydrophobic segment A2 not containing an ionic group; and
    an additive,

    the formed article forming a co-continuous phase separation structure, wherein the additive is hydrophilic and capable of suppressing oxidation deterioration of the hydrophilic segment A1,
    wherein the additive is at least one selected from the group consisting of: a compound containing Mn and/or Ce or a polyphenylene sulfide particle into the surface of which an ionic group is introduced or a fullerene to which an ionic group is introduced into the surface thereof,
    wherein the content of the additive in a hydrophilic domain including the hydrophilic segment A1 is twice or more the content of the additive in a hydrophobic domain including the hydrophobic segment A2, and
    wherein the block copolymer is an aromatic polyether ketone.

2. The formed article of polymer electrolyte composition according to Claim 1, wherein the content of the additive is 0.01 to 40% by mass relative to the entire formed article of polymer electrolyte composition.

3. The formed article of polymer electrolyte composition according to Claim 1 or 2, wherein the additive is particles having a mean particle size of 1 to 20 nm.

4. The formed article of polymer electrolyte composition according to any of Claims 1 to 3, wherein the additive is one or more kinds of compounds selected from the group consisting of 1) Mn ion, 2) Ce ion, and 3) complex of Mn ion and/or Ce ion.

5. The formed article of polymer electrolyte composition according to any of Claims 1 to 4, wherein the segment A1 containing an ionic group and the segment A2 not containing an ionic group contain a constituent unit represented by the respective general formulae S1 and S2,

    [Chemical formula 1]

    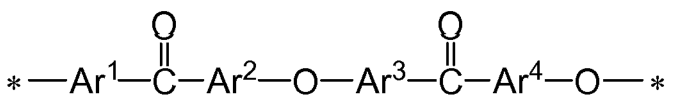 (S1)

    where, in the general formula S1, $Ar^1$ to $Ar^4$ are each an arbitrary divalent arylene group; $Ar^1$ and/or $Ar^2$ contains ionic group; $Ar^3$ and $Ar^4$ can each contain or not-contain ionic group; $Ar^1$ to $Ar^4$ can each be arbitrarily substituted, and can each independently be two or more kinds of arylene groups; and the symbol * signifies a bond moiety with the general formula S1 or with other constituent unit,

    [Chemical formula 2]

    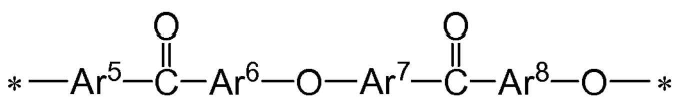 (S2)

    where, in the general formula S2, $Ar^5$ to $Ar^8$ are each an arbitrary divalent arylene group, which $Ar^5$ to $Ar^8$ can each be arbitrarily substituted, and do not contain ionic group; $Ar^5$ to $Ar^8$ can each independently be two or more kinds of arylene groups; and the symbol * signifies a bond moiety with the general formula S2 or with other constituent unit.

6. A polymer electrolyte fuel cell constituted by the formed article of polymer electrolyte composition according to Claims 1 to 5.

**Patentansprüche**

1. Formteil aus einer Polymerelektrolytzusammensetzung umfassend:

   ein Blockcopolymer mit einem oder mehreren von jeweils einem hydrophilen Segment A1, das eine ionische Gruppe enthält, und
   einem hydrophoben Segment A2, das keine ionische Gruppe enthält; und ein Additiv,
   wobei das Formteil eine cokontinuierliche Phasentrennungsstruktur ausbildet, wobei
   das Additiv hydrophil ist und fähig ist, die Oxidationsveränderung des hydrophilen Segments A1 zu unterdrücken,
   wobei das Additiv mindestens eines ausgewählt aus der Gruppe bestehend aus: einer Verbindung, die Mn und/oder Ce enthält, oder einem Polyphenylensulfidpartikel, in dessen Oberfläche eine ionische Gruppe eingeführt ist, oder einem Fulleren, in dessen Oberfläche eine ionische Gruppe eingeführt ist, ist
   wobei der Anteil des Additives in einer hydrophilen Umgebung umfassend das hydrophile Segment A1 das Doppelte oder mehr des Anteils des Additives in einer hydrophoben Umgebung umfassend das hydrophobe Segment A2 ist, und
   wobei das Blockcopolymer ein aromatisches Polyetherketon ist.

2. Formteil aus der Polymerelektrolytzusammensetzung nach Anspruch 1 wobei der Anteil des Additives 0,01 bis 40 Ma.-% im Verhältnis zum gesamten Formteil aus der Polymerelektrolytzusammensetzung ist.

3. Formteil aus der Polymerzusammensetzung nach Anspruch 1 oder 2, wobei das Additiv aus Partikeln mit einer mittleren Partikelgröße von 1 bis 20 nm besteht.

4. Formteil aus der Polymerzusammensetzung nach einem der Ansprüche 1 bis 3, wobei das Additiv eine oder mehrere Arten von Verbindungen ausgewählt aus der Gruppe bestehend aus 1) einem Mn-Ion, 2) einem Ce-Ion, und 3) einem Komplex eines Mn-Ions und/oder eines Ce-Ions ist.

5. Formteil aus der Polymerzusammensetzung nach einem der Ansprüche 1 bis 4, wobei das Segment A1, das eine ionische Gruppe umfasst, und das Segment A2, das keine ionische Gruppe umfasst, einen Bestandteil, welcher durch die jeweiligen allgemeinen Formeln S1 und S2 dargestellt ist, enthält

   [Chemische Formel 1]

   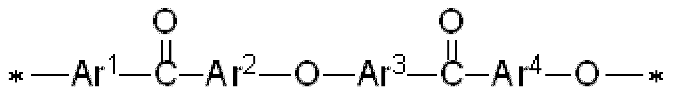
   (S1)

   wobei in der allgemeinen Formel S1 $Ar^1$ bis $Ar^4$ jeweils eine beliebige zweiwertige Arylengruppe sind; $Ar^1$ und/oder $Ar^2$ eine ionische Gruppe enthält; $Ar^3$ und $Ar^4$ jeweils eine oder keine ionische Gruppe enthalten können, $Ar^1$ bis $Ar^4$ jeweils beliebig substituiert sein können, und jeweils unabhängig zwei oder mehrere Arten von Arylengruppen sein können; und das Symbol * eine Bindungsstelle mit der allgemeinen Formel S1 oder mit einem anderen Bestandteil bedeutet,

   [Chemische Formel 2]

   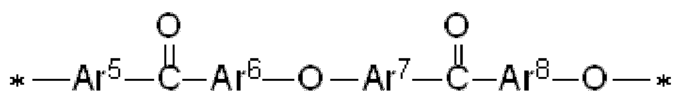
   (S2)

   wobei in der allgemeinen Formel S2 $Ar^5$ bis $Ar^8$ jeweils eine beliebige zweiwertige Arylengruppe sind, wobei $Ar^5$ bis $Ar^8$ unabhängig beliebig substituiert sein können, und keine ionische Gruppe enthalten; $Ar^5$ bis $Ar^8$ jeweils unabhängig zwei oder mehrere Arten von Arylengruppen sein können; und das Symbol * eine Bindungsstelle mit der allgemeinen Formel S2 oder mit einem anderen Bestandteil bedeutet.

6. Polymerelektrolytbrennstoffzelle, welche aus dem Formteil aus der Polymerelektrolytzusammensetzung nach einem der Ansprüche 1 bis 5 zusammengesetzt ist.

## Revendications

**1.** Article formé d'une composition d'électrolyte polymère comprenant :

un copolymère bloc ayant un ou plusieurs de chacun d'un segment hydrophile A1 contenant un groupe ionique et d'un segment hydrophobe A2 ne contenant pas de groupe ionique ; et
un additif,
l'article formé formant une structure de séparation de phases co-continue, dans lequel
l'additif est hydrophile et capable de supprimer la détérioration par oxydation du segment hydrophile A1,
dans lequel l'additif est au moins un élément choisi dans le groupe constitué : d'un composé contenant Mn et/ou Ce, d'une particule de sulfure de polyphénylène dans la surface de laquelle un groupe ionique est introduit et d'un fullerène auquel un groupe ionique est introduit dans sa surface,
dans lequel la teneur de l'additif dans un domaine hydrophile comportant le segment hydrophile A1 est au moins deux fois la teneur de l'additif dans un domaine hydrophobe comportant le segment hydrophobe A2, et
dans lequel le copolymère bloc est une polyéthercétone aromatique.

**2.** Article formé d'une composition d'électrolyte polymère selon la revendication 1, dans lequel la teneur de l'additif est comprise entre 0,01 et 40% en masse par rapport à l'article formé d'une composition d'électrolyte polymère en entier.

**3.** Article formé d'une composition d'électrolyte polymère selon la revendication 1 ou 2, dans lequel l'additif représente des particules ayant une dimension moyenne de particules allant de 1 à 20 nm.

**4.** Article formé d'une composition d'électrolyte polymère selon l'une quelconque des revendications 1 à 3, dans lequel l'additif est un ou plusieurs types de composés choisis dans le groupe constitué 1) d'ion Mn, 2) d'ion Ce, et 3) d'un complexe d'ion Mn et/ou d'ion Ce.

**5.** Article formé d'une composition d'électrolyte polymère selon l'une quelconque des revendications 1 à 4, dans lequel le segment A1 contenant un groupe ionique et le segment A2 ne contenant pas de groupe ionique contiennent une unité constitutive représentée par les formules générales respectives S1 et S2,

[Formule chimique 1]

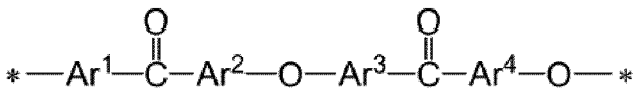
(S1)

où, dans la formule générale S1, $Ar^1$ à $Ar^4$ représentent chacun un groupe arylène divalent arbitraire ; $Ar^1$ et/ou $Ar^2$ contient un groupe ionique ; $Ar^3$ et $Ar^4$ peuvent chacun contenir ou non un groupe ionique ; $Ar^1$ à $Ar^4$ peuvent chacun être arbitrairement substitués, et peuvent chacun indépendamment être deux types ou plus de groupes arylène ; et le symbole * signifie un fragment de liaison avec la formule générale S1 ou avec une autre unité constitutive,

[Formule chimique 2]

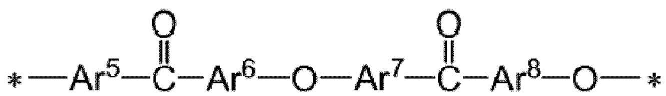
(S2)

où, dans la formule générale S2, $Ar^5$ à $Ar^8$ représentent chacun un groupe arylène divalent arbitraire, lesquels $Ar^5$ à $Ar^8$ peuvent chacun être arbitrairement substitués et ne contiennent pas de groupe ionique ; $Ar^5$ à $Ar^8$ peuvent chacun indépendamment être deux types ou plus de groupes arylène ; et le symbole * signifie un fragment de liaison avec la formule générale S2 ou avec une autre unité constitutive.

**6.** Pile à combustible à électrolyte polymère constituée par l'article formé de la composition d'électrolyte polymère selon les revendications 1 à 5.

[FIG. 1]

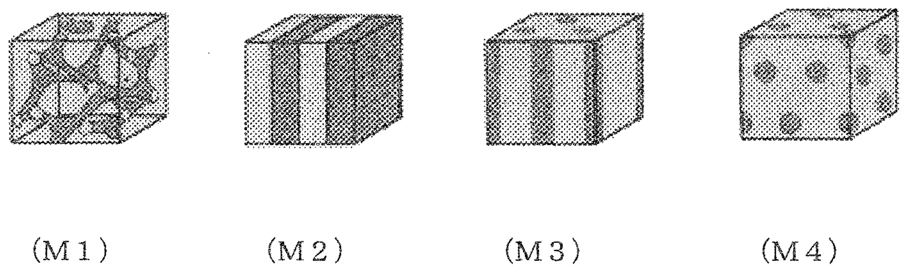

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011023308 A
- JP 2011028990 A
- JP 2004047396 A
- JP 2010238373 A
- WO 2008143303 A1
- US 2011054050 A1
- EP 2051321 A1
- EP 1858032 A1
- US 2513188 A
- JP 4427671 B
- JP 453368 A
- JP 52012240 A
- JP 61225217 A
- US 3274165 A
- GB 1160660 A
- JP 46027255 A
- BE 29437
- JP 5222196 A
- JP 2000106203 A
- JP 2007238604 A
- JP 2011228014 A
- JP 2003123793 A
- JP 2003187636 A
- JP 2004055562 A
- JP 2005068124 A
- JP 2010037277 A
- JP 2016126 A
- JP 2208322 A
- JP 2009009910 A


### Non-patent literature cited in the description


- *Annual Review of Physical Chemistry,* 1990, vol. 41, 525
- **K.HU ; T.XU ; W.YANG ; Y.FU.** *Journal of Applied Polymer Science,* vol. 91
- **E.MONTONERI.** Polymer Chemistry. *Journal of Polymer Science,* 1989, vol. 27, 3043-3051
- *Journal of Membrane Science,* 2002, vol. 197, 231-242
- *Polymer Preprints,* 2002, vol. 51, 750
- **THEODORA W. GREENE.** Protective Groups in Organic Synthesis. U.S., John Wiley & Sons, Inc, 1981
- J. Electrochem. Soc. Electrochemical Society of Japan, 1985, vol. 53, 269
- *Electrochemical Science and Technology,* 1988, vol. 135 (9), 2209